# FASCICULE DE BREVET EUROPEEN

(11) **EP 4 034 397 B1**
(45) Date de publication et mention de la délivrance du brevet: **26.02.2025**
(21) Numéro de dépôt: 20789653.1
(22) Date de dépôt: 22.09.2020
(51) Int. Cl.: B60H 1/32, B60H 1/00, B60H 1/14

(54) **SYSTEME DE TRAITEMENT THERMIQUE DESTINE A UN VEHICULE AUTOMOBILE**
WÄRMEBEHANDLUNGSSYSTEM FÜR EIN KRAFTFAHRZEUG
THERMAL TREATMENT SYSTEM INTENDED FOR A MOTOR VEHICLE

(30) Priorité: 26.09.2019 FR 1910672
(43) Date de publication de la demande: 03.08.2022
(73) Titulaire: VALEO SYSTEMES THERMIQUES, 78320 Le Mesnil Saint-Denis (FR)
(72) Inventeur: YAHIA, Mohamed, 78320 Le Mesnil Saint-Denis (FR)
(74) Mandataire: Valeo Systèmes Thermiques
(86) Numéro de dépôt international: PCT/FR2020/051645
(87) Numéro de publication internationale: WO 2021/058902

(56) Documents cités:
- EP-A1- 3 480 040
- EP-A2- 3 012 133
- GB-A- 2 529 162
- US-A1- 2019 176 563
- US-A1- 2019 263 223

## Description

La présente invention se rapporte au domaine des boucles de fluide caloporteur fonctionnant avec une boucle de fluide réfrigérant. L'invention a pour objet un système de traitement thermique comprenant au moins deux circuits de fluide caloporteur et une boucle de fluide réfrigérant.

Un tel système de traitement thermique est connu du document US 2019/263223 A1.

Une boucle de fluide réfrigérant est généralement associée à une installation de ventilation, de chauffage et/ou de climatisation d'un habitacle de véhicule pour traiter thermiquement un flux d'air extérieur au véhicule se dirigeant vers l'habitacle. En effet, une telle boucle permet, à l'aide des changements d'état du fluide réfrigérant, de chauffer et/ou de refroidir le flux d'air envoyé à l'intérieur de l'installation de ventilation, de chauffage et/ou de climatisation.

Dans une autre application de cette boucle de fluide réfrigérant, il est connu de l'utiliser pour refroidir un dispositif de stockage électrique du véhicule, ce dernier étant utilisé pour fournir une énergie à un moteur électrique capable de mettre en mouvement le véhicule. La boucle de fluide réfrigérant fournit ainsi l'énergie capable de refroidir le dispositif de stockage électrique pendant son utilisation en phases de roulage. La boucle de fluide réfrigérant est ainsi dimensionnée pour refroidir ce dispositif de stockage électrique.

Lors de son fonctionnement, la boucle de fluide réfrigérant peut être soumise à de fortes contraintes qui l'amènent aux limites de ses capacités.

C'est notamment le cas quand le dispositif de stockage électrique est utilisé d'une manière qui provoque un échauffement important de celui-ci, par exemple lors d'une phase de charge rapide du dispositif de stockage. La charge rapide consiste à charger le dispositif de stockage électrique sous une tension et un ampérage élevés de manière à charger le dispositif de stockage électrique en un temps court de quelques dizaines de minutes. Cette charge rapide implique un échauffement du dispositif de stockage électrique qu'il convient de traiter.

Par ailleurs, lors d'une phase de charge rapide, il peut être nécessaire de maintenir un niveau de confort thermique acceptable à l'intérieur de l'habitacle, c'est-à-dire que la boucle de fluide réfrigérant peut être amenée à devoir simultanément assurer le traitement thermique de l'habitacle et le traitement thermique du dispositif de stockage. Un tel fonctionnement de la boucle de fluide réfrigérant peut être observé soit car les occupants du véhicule restent à l'intérieur du véhicule pendant tout ou partie du temps de charge mentionné ci-dessus, soit pour anticiper le retour de ces occupants et éviter tous désagrément d'ordre thermique. Ces deux demandes en refroidissement impliquent une performance du système de traitement qui requiert un dimensionnement du système qui le rend peu compatible avec les contraintes des véhicules automobiles actuels, notamment les véhicules mus par un moteur électrique.

Afin d'optimiser les performances du circuit de fluide réfrigérant, il est connu d'intégrer au moins un échangeur thermique configuré pour permettre le sous-refroidissement du fluide réfrigérant par échange thermique avec un fluide caloporteur circulant dans un circuit de fluide caloporteur. Des architectures classiques d'un tel circuit de fluide caloporteur comprennent classiquement au moins un radiateur configuré pour mettre en œuvre un échange thermique entre le fluide caloporteur et un flux d'air intérieur destiné à être envoyé dans l'habitacle.

Un inconvénient de telles architectures réside dans le fait que, de par l'envoi du flux d'air intérieur dans l'environnement clos et restreint de l'habitacle, le système de traitement thermique est soumis à des contraintes qui limitent ses capacités et plus particulièrement sa capacité à sous-refroidir le fluide réfrigérant postérieurement à sa phase de condensation.

La présente invention s'inscrit dans ce contexte et vise à améliorer les performances, notamment les performances de sous-refroidissement, du système de traitement thermique qui est configuré pour dissiper les calories générées par le dispositif de stockage électrique lorsqu'il est soumis à de fortes contraintes, par exemple pendant une phase de charge rapide, et pour refroidir l'habitacle, tant en limitant la consommation et/ou l'encombrement d'un système capable de remplir simultanément ces deux fonctions.

La présente invention concerne un système de traitement thermique destiné à un véhicule comprenant au moins une boucle de fluide réfrigérant, un premier circuit de fluide caloporteur et un deuxième circuit de fluide caloporteur, suivant toutes les caractéristiques de la revendication 1.

La boucle de fluide réfrigérant du système de traitement thermique selon l'invention est configurée pour pouvoir assurer, selon la demande, le réchauffement ou le refroidissement du flux d'air intérieur avant de l'envoyer dans l'habitacle. Notamment, selon le mode de fonctionnement du circuit du système de traitement thermique selon l'invention, le premier échangeur thermique peut être configuré pour fonctionner comme un condenseur ou comme un évaporateur vis-à-vis du fluide réfrigérant.

Dans le deuxième circuit de fluide caloporteur, le radiateur secondaire est disposé en amont du deuxième échangeur thermique selon un sens de circulation du fluide caloporteur dans le deuxième circuit de fluide caloporteur, le deuxième échangeur thermique étant configuré pour pouvoir assurer le sous-refroidissement du fluide réfrigérant circulant dans la boucle de fluide réfrigérant postérieurement à sa phase de condensation. Cette phase de condensation est réalisée au sein du premier échangeur thermique, par transfert des calories du fluide réfrigérant vers le fluide caloporteur du premier circuit, puis en déchargeant ces calories dans le flux d'air extérieur via le radiateur primaire.

Par « sous-refroidissement » on entend l'abaissement de la température du fluide réfrigérant au-dessous de sa température de condensation. En effet, dans la présente invention, les calories cédées par le fluide caloporteur circulant au niveau du radiateur secondaire du deuxième circuit de fluide réfrigérant permettent avantageusement le refroidissement de ce fluide caloporteur à une température adaptée au sous-refroidissement du fluide réfrigérant circulant dans le deuxième échangeur thermique. Un tel aménagement contribue notamment à améliorer le rendement thermique du système de traitement thermique. Particulièrement, un tel sous-refroidissement est mis en œuvre lorsque le circuit de fluide réfrigérant fonctionne en mode refroidissement de l'habitacle, c'est-à-dire lorsque le fluide réfrigérant est d'abord condensé dans le premier échangeur thermique puis amené à l'état liquide dans le deuxième échangeur thermique.

Alternativement, le premier échangeur thermique et le deuxième échangeur thermique peuvent être combinés de sorte à former un unique échangeur thermique jumelé.

Selon l'invention, la boucle de fluide réfrigérant est une boucle fermée qui comprend au moins une branche principale sur laquelle sont successivement agencés au moins un dispositif de compression, le premier échangeur thermique, le deuxième échangeur thermique, au moins un organe de détente, dit organe de détente primaire, et au moins le troisième échangeur thermique.

Il est entendu que le terme « primaire » est ici associé à la disposition de l'organe de détente primaire sur la branche principale de la boucle de fluide réfrigérant et non à une quelconque hiérarchie des composants du système de traitement thermique. De même, les qualificatifs « premier », « deuxième » ont pour vocation de distinguer des éléments similaires dudit système.

A titre d'exemple, l'organe de détente primaire peut être un détendeur à commande électronique ou thermostatique.

Selon l'invention, la boucle de fluide réfrigérant comprend une bouteille et/ou un organe de détente additionnel disposé(s) entre le premier échangeur thermique et le deuxième échangeur thermique.

Selon l'invention, la boucle de fluide réfrigérant comprend une branche secondaire qui s'étend depuis un premier point de divergence, disposé entre le deuxième échangeur thermique et l'organe de détente primaire, et un premier point de convergence disposé entre le troisième échangeur thermique et le dispositif de compression, la branche secondaire comprenant au moins un organe de détente secondaire et un quatrième échangeur thermique couplé thermiquement à un dispositif de stockage électrique du véhicule.

On entend par « couplé thermiquement » le fait que le quatrième échangeur thermique est configuré pour capter les calories du fluide caloporteur circulant dans un troisième circuit de fluide caloporteur comprenant le dispositif de stockage électrique de sorte à assurer le refroidissement de ce dernier.

Le terme « secondaire » est ici associé à la localisation du ou des élément(s) dits « secondaire(s) » sur la branche secondaire du circuit. La branche secondaire peut permettre, selon le mode de fonctionnement mis en œuvre par la boucle de fluide réfrigérant, de contourner le troisième échangeur thermique et d'envoyer le fluide réfrigérant sortant du deuxième échangeur thermique vers le quatrième échangeur thermique sans que le fluide réfrigérant ne circule à travers le deuxième échangeur thermique. Ce contournement peut notamment être opéré lorsque le système de traitement thermique fonctionne en mode chauffage, c'est-à-dire lorsqu'il est nécessaire d'envoyer un flux d'air chaud dans l'habitacle du véhicule.

Selon l'invention, le deuxième circuit de fluide caloporteur peut comprendre au moins une première conduite comportant au moins le radiateur secondaire, un élément de mise en circulation du fluide caloporteur dans le deuxième circuit et le deuxième échangeur thermique, le deuxième circuit de fluide caloporteur comprenant au moins une deuxième conduite en dérivation de la première conduite, la deuxième conduite comprenant un échangeur de chaleur thermiquement couplé à au moins un élément de la chaîne de traction électrique du véhicule.

A titre d'exemple, l'élément de circulation peut consister en une pompe.

Tel que précédemment exposé, on entend par « couplé thermiquement » le fait que le deuxième échangeur thermique est configuré pour capter les calories du fluide caloporteur circulant dans le deuxième circuit de fluide de sorte à assurer le refroidissement de ce dernier.

A titre d'exemple, la deuxième conduite peut diverger et converger de la première conduite de part et d'autre du radiateur secondaire respectivement. Afin de contrôler la circulation du fluide caloporteur dans la première conduite et/ou dans la deuxième conduite, le deuxième circuit de fluide caloporteur peut comprendre au moins un élément de régulation du débit de fluide caloporteur, par exemple une vanne trois voies.

Alternativement, le deuxième circuit de fluide caloporteur peut comprendre au moins deux éléments de régulation du débit du fluide caloporteur, tels que des vannes deux voies, respectivement disposés dans la première conduite et la deuxième conduite.

Selon l'invention, le premier circuit de fluide caloporteur comprend au moins une première ligne sur laquelle sont au moins agencés le radiateur primaire, le premier échangeur thermique et un organe de mise en circulation du fluide caloporteur dans le premier circuit de fluide caloporteur.

A titre d'exemple, l'organe de mise en circulation du fluide caloporteur peut consister en une pompe.

Selon un premier mode et un deuxième mode de réalisation de la présente invention, le premier circuit de fluide caloporteur et le deuxième circuit de fluide caloporteur sont distincts.

Par « distinct » on entend que le premier circuit de fluide caloporteur et le deuxième circuit de fluide caloporteur ne sont pas interconnectés, le premier circuit de fluide caloporteur et le deuxième circuit de fluide caloporteur étant deux circuits fermés indépendants l'un de l'autre.

Selon ce premier mode et ce deuxième mode de réalisation de la présente invention, le premier circuit de fluide caloporteur comprend au moins une ligne de dérivation qui comprend un aérotherme configuré pour mettre en œuvre un échange de chaleur entre le fluide caloporteur et le flux d'air intérieur envoyé dans l'habitacle du véhicule, la ligne de dérivation s'étendant entre un point de séparation et un point de jonction, le point de séparation étant en aval du premier échangeur thermique selon le sens de circulation du fluide caloporteur dans le premier circuit de fluide caloporteur et le point de séparation étant disposé entre le premier échangeur thermique et le radiateur primaire, le point de jonction étant en amont du premier échangeur thermique selon le sens de circulation du fluide caloporteur dans le premier circuit de fluide caloporteur et le point de jonction étant disposé entre le radiateur primaire et le premier échangeur thermique.

Afin de contrôler la circulation du fluide caloporteur dans la première ligne et/ou dans la ligne de dérivation, le premier circuit de fluide caloporteur peut comprendre au moins un moyen de régulation du débit du fluide caloporteur. A titre d'exemple, le premier circuit de fluide caloporteur peut comprendre une vanne trois voies disposées au niveau du point de séparation ou du point de jonction. Alternativement, le premier circuit de fluide caloporteur peut comprendre une pluralité de moyens de régulation du débit, par exemple des vannes deux voies, disposées sur la première ligne et la ligne de dérivation.

La ligne de dérivation permet notamment d'assurer la circulation du fluide caloporteur dans l'aérotherme, soit afin de contourner le radiateur primaire, soit en combinaison dudit radiateur primaire.

Selon un troisième mode et un quatrième mode de réalisation, le premier circuit de fluide caloporteur et le deuxième circuit de fluide caloporteur sont interconnectés.

Par « interconnecté » on entend que le premier circuit de fluide caloporteur et le deuxième circuit de fluide caloporteur sont fluidiquement raccordés l'un à l'autre, de sorte que le fluide caloporteur circulant en leur sein peut successivement circuler dans l'une des lignes du premier circuit de fluide caloporteur et dans l'une des conduites du deuxième circuit de fluide caloporteur.

Selon ce troisième mode et ce quatrième mode de réalisation, le premier circuit de fluide caloporteur comprend au moins une ligne de dérivation comportant un aérotherme configuré pour mettre en œuvre un échange de chaleur entre le fluide caloporteur et le flux d'air intérieur envoyé dans l'habitacle du véhicule, la ligne de dérivation s'étendant entre un point de séparation et un point de jonction, le point de séparation étant en aval du premier échangeur thermique selon le sens de circulation du fluide caloporteur dans le premier circuit de fluide caloporteur et le point de séparation étant disposé entre le premier échangeur thermique et le radiateur primaire, le point de jonction étant disposé sur le deuxième circuit de fluide caloporteur, en amont du deuxième échangeur thermique selon le sens de circulation du fluide caloporteur dans le deuxième circuit de fluide caloporteur, le point de jonction étant disposé entre le radiateur secondaire et le deuxième échangeur thermique.

En d'autres termes, dans les troisième mode et quatrième mode de réalisation, la ligne de dérivation du premier circuit de fluide caloporteur amène le fluide caloporteur sortant de l'aérotherme sur la première conduite du deuxième circuit de fluide caloporteur, en amont du deuxième échangeur thermique selon le sens de circulation du fluide caloporteur dans cette même première conduite.

Additionnellement, la ligne de dérivation peut comprendre au moins un dispositif de chauffage électrique du fluide caloporteur.

Selon ce troisième mode et ce quatrième mode de réalisation, le deuxième circuit de fluide caloporteur s'étend entre un point de bifurcation et un point de raccordement, le point de raccordement étant disposé sur le premier circuit de fluide caloporteur, en amont du premier échangeur thermique selon le sens de circulation du fluide caloporteur dans le premier circuit de fluide caloporteur, le point de raccordement étant disposé entre le radiateur primaire et le premier échangeur thermique, et le point de bifurcation étant disposé sur le premier circuit de fluide caloporteur soit en amont du radiateur primaire selon le sens de circulation du fluide caloporteur dans le premier circuit de fluide caloporteur, le point de bifurcation étant disposé entre le premier échangeur thermique et le radiateur primaire, soit en aval du radiateur primaire selon le sens de circulation du fluide caloporteur dans le premier circuit de fluide caloporteur, le point de bifurcation étant disposé entre le radiateur primaire et le premier échangeur thermique.

Ainsi, dans le troisième mode de réalisation, le point de bifurcation est disposé sur le premier circuit de fluide caloporteur en amont du radiateur primaire selon le sens de circulation du fluide caloporteur dans le premier circuit de fluide caloporteur. Dans une telle architecture, le fluide caloporteur peut simultanément circuler à travers le radiateur primaire et/ou le radiateur secondaire. Notamment, lorsqu'une partie du fluide caloporteur est envoyée à travers le radiateur primaire et l'autre partie est envoyée dans le deuxième circuit de fluide caloporteur, vers le radiateur secondaire, le fluide caloporteur circule dans lesdits radiateurs selon un même sens de circulation.

A l'inverse, dans le quatrième mode de réalisation, le point de bifurcation est disposé sur le premier circuit de fluide caloporteur en aval du radiateur primaire selon le sens de circulation du fluide caloporteur dans le premier circuit de fluide caloporteur. Dans une telle architecture, au moins une partie du fluide caloporteur circule successivement à travers le radiateur primaire puis le radiateur secondaire.

Selon ce troisième mode et ce quatrième mode de réalisation, le système de traitement comprend au moins un organe de régulation du débit de fluide caloporteur agencé au point de bifurcation ou au point de raccordement.

A titre d'exemple, l'organe de régulation du débit de fluide caloporteur peut être une vanne trois voies. On comprend que ces organes de régulation du débit de fluide caloporteur permettent de diriger sélectivement le fluide caloporteur vers le radiateur primaire, compris dans le premier circuit de fluide caloporteur, et/ou vers le radiateur secondaire, compris dans le deuxième circuit de fluide caloporteur.

Selon l'invention, le système de traitement thermique peut en outre comprendre un échangeur thermique interne agencé entre deux portions distinctes de la boucle de fluide réfrigérant, notamment entre une première portion de la boucle de fluide réfrigérant, comprise entre le dispositif de compression et l'organe de détente primaire, en aval du dispositif de compression et au niveau de laquelle le fluide réfrigérant présente une haute pression, et une deuxième portion de la boucle de fluide réfrigérant, comprise entre l'organe de détente primaire et le dispositif de compression, en aval de l'organe de détente et dans laquelle le fluide réfrigérant présente une basse pression.

Avantageusement, cet échangeur thermique interne permet d'une part de réchauffer le fluide réfrigérant en amont du dispositif de compression de sorte à ce que ce fluide réfrigérant soit exclusivement, ou quasiment exclusivement, sous forme gazeuse lorsqu'il rejoint une entrée du dispositif de compression et d'autre part de refroidir le fluide réfrigérant en amont de l'organe de détente primaire de sorte à ce que la baisse de pression opérée par cet organe de détente soit facilitée.

Un objet de la présente invention concerne également un véhicule automobile comprenant au moins un système de traitement thermique tel que précédemment exposé.

D'autres caractéristiques détails et avantages ressortiront plus clairement à la lecture de la description détaillée donnée ci-après à titre indicatif en relation avec les différents exemples de réalisation illustrés sur les figures suivantes :
La figure 1 est une représentation schématique simplifiée partielle d'un système de traitement thermique réalisé selon un premier mode de réalisation ou un deuxième mode de réalisation ;
La figure 2 illustre schématiquement le système de traitement thermique selon le premier mode de réalisation ;
La figure 3 illustre schématiquement un premier exemple de fonctionnement du système de traitement thermique selon le premier mode de réalisation représenté sur la figure 2 dans lequel le circuit de fluide réfrigérant fonctionne en mode refroidissement de l'habitacle ;
La figure 4 illustre schématiquement un deuxième exemple de fonctionnement du système de traitement thermique selon le premier mode de réalisation représenté sur la figure 2 dans lequel le circuit de fluide réfrigérant fonctionne en mode refroidissement de l'habitacle et refroidissement d'un dispositif de stockage électrique du véhicule ;
La figure 5 illustre schématiquement un troisième exemple de fonctionnement du système de traitement thermique selon le premier mode de réalisation représenté sur la figure 2 dans lequel le circuit de fluide réfrigérant fonctionne en mode chauffage de l'habitacle et récupération de calories ;
La figure 6 illustre schématiquement le système de traitement thermique selon le deuxième mode de réalisation ;
La figure 7 illustre schématiquement un premier exemple de fonctionnement du système de traitement thermique selon le deuxième mode de réalisation représenté sur la figure 6 dans lequel le circuit de fluide réfrigérant fonctionne en mode chauffage de l'habitacle et récupération de calories ;
La figure 8 est une représentation schématique simplifiée partielle d'un système de traitement thermique réalisé selon un deuxième mode de réalisation ou un troisième mode de réalisation ;
La figure 9 illustre schématiquement le système de traitement thermique selon le troisième mode de réalisation ;
La figure 10 illustre schématiquement un premier exemple de fonctionnement du système de traitement thermique selon le troisième mode de réalisation représenté sur la figure 9 dans lequel le circuit de fluide réfrigérant fonctionne en mode refroidissement de l'habitacle ;
La figure 11 illustre schématiquement un deuxième exemple de fonctionnement du système de traitement thermique selon le troisième mode de réalisation représenté sur la figure 9 dans lequel le circuit de fluide réfrigérant fonctionne en mode refroidissement de l'habitacle et refroidissement du dispositif de stockage électrique du véhicule ;
La figure 12 illustre schématiquement un troisième exemple de fonctionnement du système de traitement thermique selon le troisième mode de réalisation représenté sur la figure 9 dans lequel le circuit de fluide réfrigérant fonctionne en mode chauffage de l'habitacle ;
La figure 13 illustre schématiquement le système de traitement thermique selon le quatrième mode de réalisation ;
La figure 14 illustre schématiquement un premier exemple de fonctionnement du système de traitement thermique selon le quatrième mode de réalisation représenté sur la figure 13 dans lequel le circuit de fluide réfrigérant fonctionne en mode refroidissement de l'habitacle.

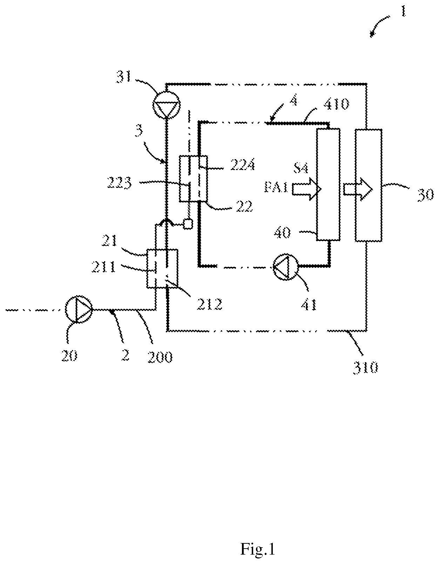

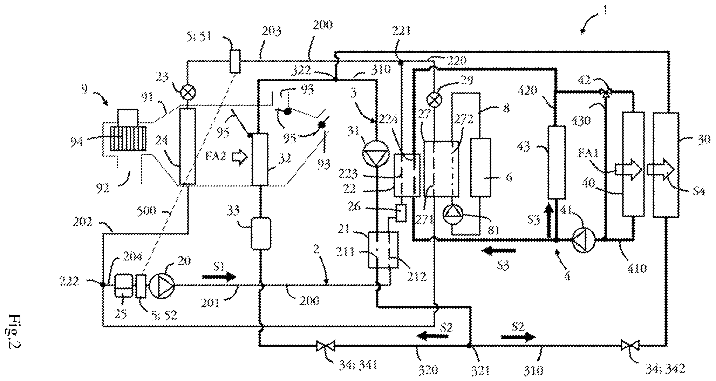

La figure 1 et la figure 2 illustrent schématiquement un système de traitement thermique 1 de plusieurs fonctions d'un véhicule automobile, parmi lesquelles on trouve au moins une installation de ventilation, de chauffage et/ou de climatisation de l'habitacle, un dispositif de stockage électrique et au moins élément d'une chaîne de traction électrique du véhicule. La figure 1 représente en partie le système de traitement thermique 1, tandis que la figure 2 représente l'ensemble du système de traitement thermique 1 lorsque celui-ci est réalisé selon un premier mode de réalisation.

Le système de traitement thermique 1 comprend une boucle 2 de fluide réfrigérant, qui est destinée notamment au traitement thermique d'un habitacle d'un véhicule, un premier circuit 3 de fluide caloporteur et un deuxième circuit 4 de fluide caloporteur. Le fluide caloporteur est notamment un liquide caloporteur tel que de l'eau glycolée.

Dans l'ensemble de la description, les termes « amont », « aval », « entrée » et « sortie » se réfèrent à un sens de circulation S1 du fluide réfrigérant dans la boucle 2 de fluide réfrigérant, à sens de circulation S2 du fluide caloporteur dans le premier circuit 3 de fluide caloporteur, à un sens de circulation S3 du fluide caloporteur dans le deuxième circuit 4 de fluide caloporteur ou à sens de circulation S4 d'un flux d'air extérieur FA1 à l'habitacle du véhicule.

La boucle 2 de fluide réfrigérant comprend successivement, selon le sens de circulation S1 du fluide réfrigérant dans la boucle 2 de fluide réfrigérant, un dispositif de compression 20, un premier échangeur thermique 21 et un deuxième échangeur thermique 22, le premier échangeur thermique 21 et le deuxième échangeur thermique 22 étant configurés pour mettre en œuvre un échange thermique entre le fluide réfrigérant et le fluide caloporteur circulant dans l'un et l'autre des circuits de fluide caloporteur du système de traitement thermique 1.

Dans la présente invention, le premier circuit 3 de fluide caloporteur comprend le premier échangeur thermique 21 tandis que le deuxième circuit 4 de fluide caloporteur comprend le deuxième échangeur thermique 22.

Le premier circuit 3 de fluide caloporteur comprend également au moins un radiateur primaire 30, configuré pour mettre en œuvre un échange thermique entre le fluide caloporteur et le flux d'air extérieur FA1 à l'habitacle du véhicule, le radiateur primaire 30 étant disposé en aval du premier échangeur thermique 21 selon le sens de circulation S2 du fluide caloporteur dans le premier circuit 3 de fluide caloporteur. Avantageusement, le premier circuit 3 de fluide caloporteur peut comprendre un organe de mise en circulation 31 du fluide caloporteur, par exemple une pompe.

Le deuxième circuit 4 de fluide caloporteur comprend en outre au moins un radiateur secondaire 40 configuré pour mettre en œuvre un échange thermique entre le fluide caloporteur et le flux d'air extérieur FA1 à l'habitacle, le radiateur secondaire 40 étant disposé en amont du deuxième échangeur thermique 22 selon le sens de circulation S3 du fluide caloporteur dans le deuxième circuit 4 de fluide caloporteur.

Le deuxième circuit 4 de fluide caloporteur comprend au moins un élément de mise en circulation 41 du fluide réfrigérant dans le deuxième circuit, par exemple une pompe.

Au sein du système de traitement thermique 1, le radiateur primaire 30 et le radiateur secondaire 40 sont exposés au flux d'air extérieur FA1 à l'habitacle, le radiateur primaire 30 étant disposé en aval du radiateur secondaire 40 selon le sens de circulation S4 du flux d'air extérieur FA1 au travers desdits radiateurs 30, 40. On comprend donc que le radiateur secondaire 40 est traversé par le flux d'air extérieure FA1 à l'habitacle avant que celui-ci ne traverse le radiateur primaire 30. Avantageusement, le radiateur primaire 30 et le radiateur secondaire 40 sont aménagés en face avant du véhicule, mais ils pourraient aussi être installés sur un pavillon du véhicule, dans une aile arrière et d'une manière générale en toutes zones du véhicule qui peut être balayées par le flux d'air extérieur FA1.

La figure 2 représente le système de traitement thermique 1 dans son intégralité.

La boucle 2 de fluide réfrigérant consiste en une boucle fermée qui comprend au moins une branche principale 200 sur laquelle sont disposés le dispositif de compression 20, destiné à élever la pression du fluide réfrigérant, le premier échangeur thermique 21, le deuxième échangeur thermique 22, au moins un organe de détente, dit organe de détente primaire 23, destiné à diminuer la pression du fluide réfrigérant, et au moins un troisième échangeur thermique 24, destiné à traiter thermiquement un flux d'air intérieur FA2, distinct du flux d'air extérieur FA1, et qui est destiné à être envoyé dans l'habitacle du véhicule.

Avantageusement, selon le mode de fonctionnement mis en œuvre par le système de traitement thermique 1, le deuxième échangeur thermique 22 peut être utilisé comme sous-refroidisseur ou comme condenseur selon le besoin. Le deuxième échangeur thermique 22 est disposé entre le premier échangeur thermique 21 et l'organe de détente primaire 23, en aval du premier échangeur thermique 21 selon le sens de circulation S1 du fluide réfrigérant dans la boucle 2 de fluide réfrigérant. Il est à noter que les différents fluides circulant dans le deuxième échangeur thermique 22 ne se mélangent pas et que l'échange de chaleur entre ces deux fluides se fait par conduction.

La boucle 2 de fluide réfrigérant comprend ainsi une première portion 201, comprise entre le dispositif de compression 20 et l'organe de détente primaire 23, dans laquelle le fluide réfrigérant est soumis à une haute pression, et une deuxième portion 202, comprise entre l'organe de détente primaire 23 et le dispositif de compression 20, dans laquelle le fluide réfrigérant est soumis une basse pression, inférieure à la haute pression.

Avantageusement, la boucle 2 de fluide réfrigérant comprend un échangeur thermique interne 5. Cet échangeur thermique interne 5 permet de récupérer des calories du fluide réfrigérant circulant dans la première portion 201 pour les échanger avec le fluide réfrigérant circulant en un autre point de la boucle 2 de fluide réfrigérant, notamment au niveau de la deuxième portion 202. L'échangeur thermique interne 5 contribue à réduire la puissance consommée par le dispositif de compression 20 et globalement augmenter le coefficient de performance du circuit de fluide réfrigérant.

A titre d'exemple, une première partie 51 de l'échangeur thermique interne 5 peut être disposée sur un premier tube 203, dit haute pression et haute température, de la branche principale 200 de la boucle 2 de fluide réfrigérant tandis qu'une deuxième partie 52 de l'échangeur thermique interne 5 est disposée au niveau d'un deuxième tube 204 de la branche principale 200, dit basse pression et basse température. Le fluide réfrigérant à basse température étant plus froid que le fluide réfrigérant à pression supérieure, on comprend que l'échangeur thermique interne 5 autorise un échange de chaleur entre ses deux parties 51, 52 et donc entre les deux tubes 203, 204 de la boucle 2 de fluide réfrigérant sur lesquelles sont agencées ces parties 51, 52.

Dans l'exemple illustré, la première partie 51 de l'échangeur thermique interne 5 est disposée entre le deuxième échangeur thermique 22 et l'organe de détente primaire 23 et la deuxième partie 52 de cet échangeur thermique interne 5 est disposée entre le troisième échangeur thermique 24 et le dispositif de compression 20. L'échangeur thermique interne 5 permet le réchauffement du fluide réfrigérant en amont du dispositif de compression 20 de sorte que ce fluide réfrigérant arrive dans ce dispositif de compression 20 à l'état gazeux. Dans l'ensemble des figures du présent document, l'échange thermique mis en œuvre entre la première partie 51 de l'échangeur thermique interne 5 et la deuxième partie 52 de l'échangeur thermique interne 5 est schématiquement représenté par la ligne pointillée 500.

La branche principale 200 du circuit de fluide réfrigérant peut également comprendre un dispositif d'accumulation 25 agencé entre le troisième échangeur thermique 24 et la deuxième partie 52 de l'échangeur thermique interne 5, en amont du dispositif de compression 20. Le dispositif d'accumulation 25 permet d'accumuler une phase liquide du fluide réfrigérant de manière à garantir que seule une phase gazeuse du fluide réfrigérant se dirige vers le dispositif de compression 20. Également, le dispositif d'accumulation 25 permet de gérer la quantité de fluide réfrigérant circulant dans la boucle 2 de fluide réfrigérant.

La boucle 2 de fluide réfrigérant comprend une branche secondaire 220 qui diverge de la branche principale 200 au niveau d'un point de divergence 221, situé entre le deuxième échangeur thermique 22 et l'organe de détente primaire 23, et qui rejoint la branche principale 200 en un point de convergence 222 situé entre le troisième échangeur thermique 24 et le dispositif de compression 20.

La branche secondaire 220 comprend successivement, selon le sens de circulation S1 du fluide réfrigérant dans la boucle 2 de fluide réfrigérant, un organe de détente secondaire 29 et un quatrième échangeur thermique 27 couplé thermiquement à un dispositif de stockage électrique 6 du véhicule configuré pour alimenter électriquement au moins un élément de la chaîne de traction électrique dudit véhicule. Notamment, le dispositif de stockage électrique 6 est compris sur un troisième circuit de fluide caloporteur 8, lequel comprend, en outre, au moins un circulateur 81 destiné à mettre en circulation le fluide caloporteur.

Le quatrième échangeur thermique 27 est ainsi agencé en parallèle du troisième échangeur thermique 24, du point de vue du fluide réfrigérant. On comprend que le quatrième échangeur thermique 27 est configuré pour mettre en œuvre un échange de chaleur entre le fluide réfrigérant circulant dans la branche secondaire 220 et le fluide caloporteur circulant dans le troisième circuit de fluide caloporteur 8.

Additionnellement, la boucle 2 de fluide réfrigérant peut comprendre une bouteille 26 et/ou un organe de détente additionnel, non représenté(s), disposé(s) entre le premier échangeur thermique 21 et le deuxième échangeur thermique 22. Selon le premier mode de réalisation de la présente invention, la boucle 2 de fluide réfrigérant comprend au moins une bouteille 26 installée entre le premier échangeur thermique 21 et le deuxième échangeur thermique 22.

Dans le premier mode de réalisation tel qu'illustré aux figures 1 et 2, le premier circuit 3 de fluide caloporteur consiste en un circuit fermé qui comprend une première ligne 310 sur laquelle sont successivement disposés, selon le sens de circulation S2 du fluide caloporteur dans le premier circuit 3 de fluide caloporteur, au moins l'organe de mise en circulation 31 du fluide caloporteur, le premier échangeur thermique 21 et le radiateur primaire 30.

Le premier circuit 3 de fluide caloporteur comprend en outre une ligne de dérivation 320 qui diverge de la première ligne 310 au niveau d'un point de séparation 321 compris entre le premier échangeur thermique 21 et le radiateur primaire 30 et qui la rejoint au niveau d'un point de jonction 322 situé entre le radiateur primaire 30 et l'organe de mise en circulation 31 du fluide caloporteur. En outre, la ligne de dérivation 320 comprend un aérotherme 32 configuré pour mettre en œuvre un échange de chaleur entre le fluide caloporteur et le flux d'air intérieur FA2 envoyé dans l'habitacle.

Dans la présente invention, l'aérotherme 32 du premier circuit 3 de fluide caloporteur et le troisième échangeur thermique 24 sont également compris dans une installation 9 de climatisation, de chauffage et/ou de ventilation de l'habitacle du véhicule. Tel que schématiquement représenté, ladite installation 9 comprend au moins un boîtier 91 de climatisation, de chauffage et/ou de ventilation, ou boîtier 91, réalisé dans une matière synthétique thermorésistante, dans lequel sont disposé l'aérotherme 32 et le deuxième échangeur thermique 22. Le boîtier 91 comprend au moins une bouche d'entrée 92, destinée à faire entrer le flux d'air intérieur FA2 dans le boîtier 91, et une pluralité de bouches de sortie 93, destinées à envoyer le flux d'air intérieur FA2 thermiquement traité par l'installation 9 vers différentes zones de l'habitacle du véhicule. L'installation 9 comprend également au moins un ventilateur 94 et une pluralité de volets et/ou clapets 95 destinés à diriger le flux d'air intérieur FA2 au sein du boîtier 91, par exemple de sorte à ce qu'il traverse l'aérotherme 32 ou non, et dans les différentes buses de sortie 93.

Additionnellement, le premier circuit 3 de fluide caloporteur peut comprendre au moins un dispositif de chauffage électrique 33 du fluide caloporteur disposé en amont de l'aérotherme 32 selon le sens de circulation S2 du fluide caloporteur dans le premier circuit 3 de fluide caloporteur.

En d'autres termes, la ligne de dérivation 320 assure le contournement du radiateur primaire 30. Afin de contrôler la circulation du fluide caloporteur dans la première ligne 310 et/ou dans la ligne de dérivation 320, le premier circuit 3 de fluide caloporteur comprend au moins un moyen de régulation du débit 34 de fluide caloporteur. A titre d'exemple et tel qu'illustré, le premier circuit 3 de fluide caloporteur peut comprendre deux vannes deux voies, une première vanne 341 étant disposée sur la ligne de dérivation 320, entre le premier échangeur thermique 21 et le dispositif de chauffage électrique 33 du fluide caloporteur, et une deuxième vanne 342 étant disposée sur la première ligne 310, entre le premier échangeur thermique 21 et le radiateur primaire 30. Alternativement, le premier circuit 3 de fluide caloporteur peut comprendre une vanne trois voies disposée au niveau du point de séparation 321 ou du point de jonction 322.

Selon le premier mode de réalisation, le deuxième circuit 4 de fluide caloporteur consiste en un circuit fermé qui comprend une première conduite 410 sur laquelle sont successivement disposés, selon le sens de circulation S3 du fluide caloporteur dans le deuxième circuit 4 de fluide caloporteur, au moins l'élément de mise en circulation 41 du fluide caloporteur, le deuxième échangeur thermique 22 et le radiateur secondaire 40.

Le deuxième circuit 4 de fluide caloporteur comprend en outre une deuxième conduite 420 en dérivation de la première conduite 410, la deuxième conduite 420 divergeant et convergeant de la première conduite 410 de part et d'autre du radiateur secondaire 40 respectivement. Le deuxième circuit 4 de fluide caloporteur comprend encore une troisième conduite 430 qui permet au fluide caloporteur de contourner soit le radiateur secondaire 40 soit un échangeur de chaleur 43 thermiquement couplé à au moins un élément de la chaîne de traction électrique du véhicule automobile autre que le dispositif de stockage électrique 6. La troisième conduite 430 est dépourvu d'échangeur thermique et se comporte ainsi comme une ligne de contournement.

La circulation du fluide caloporteur le long de la deuxième conduite 420 et/ou de la première conduite 410 et/ou de la troisième conduit 430 est, à titre d'exemple, commandée par un élément de régulation du débit 42 de fluide caloporteur tel qu'une vanne trois voies ou, alternativement, par une pluralité d'éléments de régulation du débit 42 du fluide caloporteur, non représentés. La deuxième conduite 420 comprend l'échangeur de chaleur 43 thermiquement couplé à au moins un élément de la chaîne de traction électrique du véhicule automobile, par exemple un moteur électrique et/ou un module de commande de ce moteur électrique, et est agencée afin, par exemple, d'opérer un échange thermique entre le fluide caloporteur circulant dans la deuxième conduite 420 et le flux d'air extérieur FA1 à l'habitacle du véhicule. Notamment, le flux d'air extérieur FA1 peut assurer le refroidissement du fluide caloporteur qui peut alors capter via l'échangeur de chaleur 43 des calories émises par l'élément de la chaîne de traction thermiquement.

Dans le premier mode de réalisation de l'invention, le premier circuit 3 de fluide caloporteur et le deuxième circuit 4 de fluide caloporteur du système de traitement thermique 1 sont distincts, le premier circuit 3 de fluide caloporteur et le deuxième circuit 4 de fluide caloporteur étant deux circuits fermés indépendants l'un de l'autre.

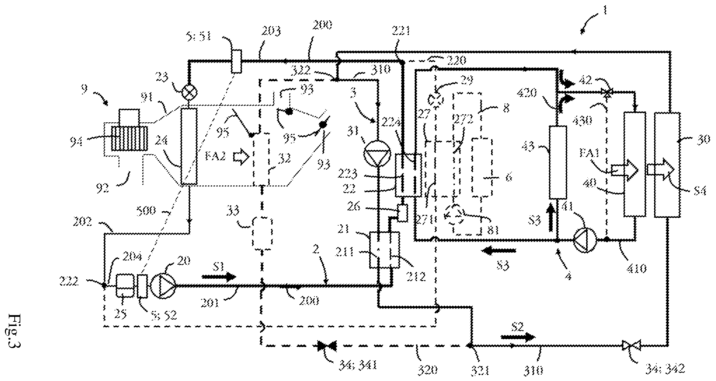

Les figures 3 à 5 représentent différents exemples de fonctionnement du système de traitement thermique 1 selon le premier mode de réalisation tel que représenté à la figure 2. Sur ces figures, les traits pleins représentent des conduites, lignes ou branches du système de traitement thermique 1 dans lesquelles le fluide réfrigérant ou le fluide caloporteur circulent, tandis que les traits pointillés représentent des conduites, lignes ou branches du système de traitement thermique 1 dans lesquelles ni le fluide réfrigérant ni le fluide caloporteur ne circulent. Le flux d'air intérieur FA2, le flux d'air extérieur FA1 et son sens de circulation S4, un sens de circulation S2 du fluide caloporteur dans le premier circuit 3 de fluide caloporteur, un sens de circulation S3 du fluide caloporteur dans le deuxième circuit 4 de fluide caloporteur et un sens de circulation S1 du fluide réfrigérant dans la boucle 2 de fluide réfrigérant sont également schématiquement représentés sur les différentes figures 1 à 13. Les éléments ou moyens de régulation de débit 34, 42 du fluide caloporteur ou du fluide réfrigérant sont quant à eux illustrés pleins quand ils bloquent la circulation du fluide concerné, et évidés quand ils autorisent ladite circulation.

La figure 3 illustre ainsi un premier exemple de fonctionnement du système de traitement thermique 1 dans lequel le circuit 3 de fluide réfrigérant est configuré pour fonctionner en mode refroidissement de l'habitacle, c'est-à-dire un mode climatisation.

Selon ce premier exemple de fonctionnement, dans la boucle 2 de fluide réfrigérant, le fluide réfrigérant circule dans la branche principale 200, tandis que la branche secondaire 220 n'est pas parcourue par le fluide réfrigérant. A titre d'exemple, la circulation du fluide réfrigérant peut être entravée par la fermeture de l'organe de détente secondaire 29.

Ainsi, selon ce premier exemple de fonctionnement du système de traitement thermique 1, le fluide réfrigérant quitte le dispositif de compression 20 sous haute pression, à haute température et à l'état gazeux en direction du premier échangeur thermique 21 qui fonctionne comme un condenseur. Le fluide réfrigérant entre dans une première passe 211 du premier échangeur thermique 21 à l'état gazeux et à une température supérieure à la température du fluide caloporteur circulant dans une deuxième passe 212 du premier échangeur thermique 21 et cède ses calories au fluide caloporteur. Le fluide réfrigérant ainsi refroidi quitte le premier échangeur thermique 21 au moins majoritairement à l'état liquide.

De manière optionnelle, le fluide réfrigérant est ensuite amené au niveau de la bouteille 26, la phase liquide et la phase gazeuse sont séparées et seule la phase liquide est envoyée jusqu'au deuxième échangeur thermique 22.

Qu'il provienne de la bouteille 26 ou directement du premier échangeur thermique 21, le fluide réfrigérant circule alors dans une première passe 223 du deuxième échangeur thermique 22, ce fluide réfrigérant présentant une température supérieure à celle du fluide caloporteur circulant dans une deuxième passe 224 du deuxième échangeur thermique 22, le fluide réfrigérant cède des calories au fluide caloporteur. Selon la présente invention, le deuxième échangeur thermique 22 est configuré pour assurer le sous-refroidissement du fluide réfrigérant, c'est-à-dire que l'écart de température entre le fluide réfrigérant à l'état liquide et le fluide caloporteur permet un refroidissement du fluide réfrigérant à une température inférieure à sa température de condensation.

Le fluide réfrigérant sortant de deuxième échangeur thermique 22, à l'état liquide, est envoyé vers la première partie 51 de l'échangeur thermique interne 5 où il est impliqué dans un échange thermique tel que précédemment exposé, puis le fluide réfrigérant est amené à l'organe de détente primaire 23 dans lequel il subit une diminution de sa pression.

Le fluide réfrigérant, à basse pression et à l'état diphasique, rejoint le troisième échangeur thermique 24, utilisé comme évaporateur, dans lequel il est évaporé en captant des calories du flux d'air intérieur FA2. Le flux d'air intérieur FA2 est refroidi et envoyé vers l'habitacle du véhicule tandis que le fluide réfrigérant quitte le troisième échangeur thermique 24. Le fluide réfrigérant rejoint ensuite le dispositif d'accumulation 25 dans lequel, la phase liquide et la phase gazeuse sont séparées et la phase gazeuse est envoyée vers la deuxième partie 52 de l'échangeur thermique interne 5 puis, à nouveau, vers le dispositif de compression 20.

Dans le premier circuit 3 de fluide caloporteur, le fluide caloporteur ne circule pas dans la ligne de dérivation 320 et la circulation du fluide caloporteur se fait essentiellement au niveau de la première ligne 310, une telle circulation étant assurée par l'ouverture et la fermeture sélective des différents moyens de régulation du débit 34 du fluide caloporteur compris dans le premier circuit 3 de fluide caloporteur, ici la fermeture de la première vanne 341 deux voies et l'ouverture de la deuxième vanne 342 deux voies.

Le fluide caloporteur est mis en circulation dans le premier circuit 3 de fluide caloporteur par l'organe de mise en circulation 31. Le fluide caloporteur est amené jusqu'au premier échangeur thermique 21 et circule dans la deuxième passe 212 du premier échangeur thermique 21. Tel que précédemment exposé, le fluide caloporteur, plus froid que le fluide réfrigérant circulant dans la première passe 211 du premier échangeur thermique 21, est réchauffé par l'échange de chaleur réalisé avec le fluide réfrigérant. Le fluide caloporteur circule ensuite le long de la première ligne 310, passe par le point de séparation 321 puis est envoyé jusqu'au radiateur primaire 30.

Le fluide caloporteur entrant dans le radiateur primaire 30 étant à une température supérieure à la température du flux d'air extérieur FA1, le fluide caloporteur cède des calories aux flux d'air extérieur FA1 et ce dernier est réchauffé. Le fluide caloporteur sortant du radiateur primaire 30, refroidi, est ensuite ramené vers l'organe de mise en circulation 31.

Dans le deuxième circuit 4 de fluide caloporteur, le fluide caloporteur parcourt la première conduite 410 ainsi que la deuxième conduite 420, la fermeture partielle de l'élément de régulation du débit 42 du fluide caloporteur empêchant la circulation du fluide caloporteur dans la troisième conduite 430.

Le fluide caloporteur est mis en circulation dans le deuxième circuit 4 de fluide caloporteur par l'élément de mise en circulation 41. Le fluide caloporteur est amené dans le deuxième échangeur thermique 22. Tel que précédemment exposé, il circule dans la deuxième passe 224 du deuxième échangeur thermique 22. Le fluide caloporteur étant plus froid que le fluide réfrigérant liquide circulant dans la première passe 223 du deuxième échangeur thermique 22, le fluide caloporteur capte les calories du fluide réfrigérant, assurant ainsi le sous-refroidissement de ce dernier.

Le fluide caloporteur sort du deuxième échangeur thermique 22 réchauffé et est amené jusqu'au radiateur secondaire 40. Tel qu'exposé plus haut, le radiateur secondaire 40 est disposé en amont du radiateur primaire 30 selon le sens de circulation du flux d'air extérieur FA1 à travers les radiateur primaire 30 et radiateur secondaire 40. Le flux d'air extérieur FA1, plus froid que le fluide caloporteur entrant respectivement dans le radiateur secondaire 40 puis dans le radiateur primaire 30, traverse ainsi dans un premier temps le radiateur secondaire 40, capte les calories du fluide caloporteur circulant dans le radiateur secondaire 40, puis le flux d'air extérieur FA1 réchauffé traverse le radiateur primaire 30 au niveau duquel il capte les calories du fluide caloporteur circulant dans le radiateur primaire 30.

Le fluide caloporteur refroidi et sortant du radiateur secondaire 40 est ensuite renvoyé vers l'élément de mise en circulation 41 puis vers le deuxième échangeur thermique 22. Le fluide caloporteur refroidi et sortant du radiateur secondaire 40 peut également circuler dans la deuxième conduite 420 et ainsi capter les calories présentes dans l'échangeur de chaleur 43 thermiquement couplé à au moins un élément de la chaîne de traction électrique du véhicule automobile.

Le deuxième circuit 4 de fluide caloporteur est donc configuré pour que le radiateur secondaire 40 décharge dans le flux d'air extérieure FA1 les calories captées au niveau du premier échangeur thermique 21 et au niveau de l'échangeur de chaleur 43 thermiquement couplé à au moins un élément de la chaîne de traction électrique du véhicule automobile. Avantageusement, selon la présente invention, le radiateur secondaire 40, impliqué dans le premier échange thermique avec le flux d'air extérieur FA1, est disposé en série du deuxième échangeur thermique 22 qui est configuré pour assurer le sous-refroidissement du fluide réfrigérant postérieurement à sa phase de condensation. Le radiateur primaire 30, impliqué dans le deuxième échange thermique avec le flux d'air extérieur FA1 qui a été réchauffé une première fois par échange thermique en traversant le radiateur secondaire 40, est disposé en série du premier échangeur thermique 21, lequel est configuré pour condenser le fluide réfrigérant et nécessite donc un écart de température moins important entre le fluide caloporteur et le fluide réfrigérant que le deuxième échangeur thermique 22 utilisé comme sous-refroidisseur.

Dans le présent mode de fonctionnement, le système de traitement thermique 1 fonctionne en mode refroidissement de l'habitacle, c'est-à-dire qu'il permet l'envoi d'air frais dans l'habitacle du véhicule.

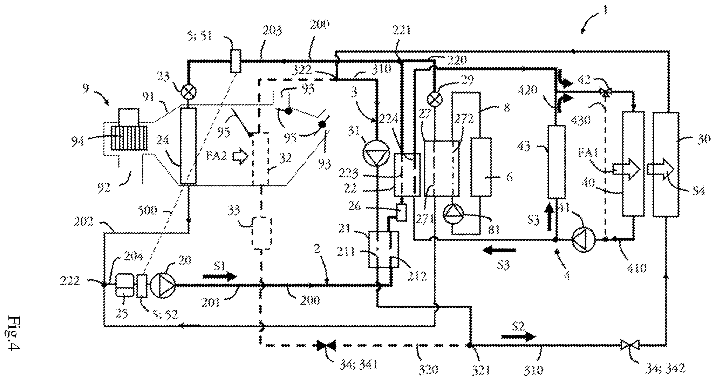

La figure 4 illustre un deuxième exemple de fonctionnement du système de traitement thermique 1 selon le premier mode de réalisation mettant en œuvre un mode refroidissement de l'habitacle et un mode refroidissement du dispositif de stockage électrique 6, pouvant, par exemple, être mis en œuvre lors d'une phase de charge rapide dudit dispositif de stockage électrique 6.

Dans ce deuxième mode de fonctionnement, la circulation du fluide caloporteur dans le premier circuit 3 de fluide caloporteur et la circulation du fluide caloporteur dans le deuxième circuit 4 de fluide caloporteur est identique à celle précédemment exposée en référence au premier exemple de fonctionnement et à la figure 3, la description faite de ces deux circuits 3, 4 en référence à la figure 3 est ainsi transposable au deuxième exemple de fonctionnement illustré sur la figure 4.

Ce deuxième mode de fonctionnement se distingue du premier mode de fonctionnement en ce que, dans la boucle 2 de fluide réfrigérant, le fluide réfrigérant sortant du deuxième échangeur thermique 22, sous-refroidi, est séparé en deux flux de fluide réfrigérant au niveau du point de divergence 221. Un premier flux de fluide réfrigérant continue à circuler sur la branche principale 200 et suit un cheminement identique à celui précédemment exposé en référence à la figure 3. Un deuxième flux de fluide réfrigérant est envoyé sur la branche secondaire 220.

Autrement dit, l'organe de détente secondaire 29 est partiellement ouvert et autorise la circulation du fluide réfrigérant dans ladite branche secondaire 220, en provoquant une détente de celui-ci. Le deuxième flux de fluide réfrigérant est dirigé vers l'organe de détente secondaire 29 dans lequel il subit une détente avant de rejoindre le quatrième échangeur thermique 27.

Dans le quatrième échangeur thermique 27, le fluide réfrigérant circulant dans une première passe 271 du quatrième échangeur thermique 27 capte des calories du fluide caloporteur circulant dans une deuxième passe 272 du quatrième échangeur thermique 27.

Le fluide réfrigérant quitte le quatrième échangeur thermique 27 sous forme majoritairement gazeuse et rejoint le point de convergence 222 au niveau duquel le premier flux de fluide réfrigérant et le deuxième flux de fluide réfrigérant sont réunis afin d'être dirigés vers le dispositif d'accumulation 25. Dans un même temps, le fluide caloporteur qui a été refroidi dans le quatrième échangeur thermique 27 circule dans le troisième circuit de fluide caloporteur 8 de sorte à refroidir le dispositif de stockage électrique 6.

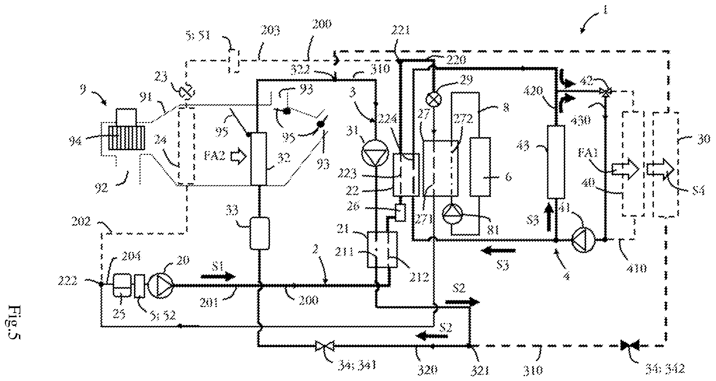

La figure 5 représente de façon schématique un troisième exemple de fonctionnement du système de traitement thermique 1 selon lequel la boucle 2 de fluide réfrigérant fonctionne en mode chauffage de l'habitacle, c'est-à-dire qu'elle opère le réchauffement du flux d'air intérieur FA2 avant que celui-ci ne soit envoyé dans l'habitacle du véhicule, et selon un mode récupération de calories sur le dispositif de stockage électrique 6.

Dans la boucle 2 de fluide réfrigérant, le troisième échangeur thermique 24 est inactif, en ce sens qu'il n'est pas traversé par le fluide réfrigérant.

Le fluide réfrigérant quitte le dispositif de compression 20 à l'état gazeux, à haute pression et à haute température, et est amené dans le premier échangeur thermique 21. Similairement au premier et au deuxième exemple de fonctionnement, le premier échangeur thermique 21 est utilisé comme condenseur et le fluide réfrigérant circulant dans la première passe 211 du premier échangeur thermique 21 est refroidi par échange thermique avec le fluide caloporteur circulant dans la deuxième passe 212 du premier échangeur thermique 21.

Le fluide réfrigérant refroidi est envoyé vers la bouteille 26 puis la portion liquide du fluide réfrigérant est envoyée vers le deuxième échangeur thermique 22 en vue de son sous-refroidissement par échange thermique avec le fluide caloporteur circulant dans la deuxième passe 224 du deuxième échangeur thermique 22. Le fluide réfrigérant sortant du deuxième échangeur thermique 22, sous-refroidi, est ensuite amené jusqu'au point de divergence 221. Lorsque le système de traitement thermique 1 fonctionne en mode chauffage et récupération de calories, l'organe de détente primaire 23, compris dans la branche principale 200, est fermé, tandis que l'organe de détente secondaire 29, compris dans la branche secondaire 220, est ouvert. Il en résulte que la circulation du fluide réfrigérant dans le reste de la branche principale 200 est entravée et que le fluide réfrigérant est envoyé dans la branche secondaire 220 de manière à contourner le troisième échangeur thermique 24.

Le fluide réfrigérant est envoyé dans l'organe de détente secondaire 29, dans lequel il est détendu, puis le fluide basse pression et basse température est amené vers le quatrième échangeur thermique 27, thermiquement couplé au troisième circuit de fluide caloporteur 8 et donc au dispositif de stockage électrique 6.

Dans le présent mode de fonctionnement, le troisième échangeur thermique 24 fonctionne comme un évaporateur, une température de ce fluide réfrigérant étant inférieure à une température du fluide caloporteur qui circule dans la deuxième passe 272 du quatrième échangeur thermique 27, le fluide réfrigérant capte les calories du fluide caloporteur circulant dans la le troisième circuit de fluide caloporteur 8, ledit fluide caloporteur assurant ensuite le refroidissement du dispositif de stockage électrique 6 du véhicule.

Avantageusement, les calories cédées par le dispositif de stockage électrique 6 au fluide caloporteur du troisième circuit de fluide caloporteur 8 sont récupérées et permettent de réchauffer le fluide réfrigérant de la boucle 2 de fluide réfrigérant en amont du dispositif de compression 20. Le fluide réfrigérant quitte ainsi le quatrième échangeur thermique 27 à l'état au moins partiellement gazeux et rejoint ensuite le point de convergence 222 puis le dispositif d'accumulation 25 sur la branche principale 200.

Dans le premier circuit 3 de fluide caloporteur, tel que précédemment exposé, le fluide caloporteur est mis en circulation par l'organe de mise en circulation 31, puis est envoyé dans le premier échangeur thermique 21 dans lequel il capte les calories du fluide réfrigérant circulant dans la première passe 211 du premier échangeur thermique 21, le fluide caloporteur est ensuite amené jusqu'au point de séparation 321 du premier circuit 3 de fluide caloporteur.

Lorsque le système de traitement thermique 1 fonctionne en mode chauffage et récupération de calories, les moyens de régulation du débit 34 du fluide caloporteur sont configurés pour entraver la circulation du fluide caloporteur dans le reste de la première ligne 310 et pour envoyer le fluide caloporteur vers la ligne de dérivation 320. Ainsi, la première vanne 341 deux voies est ouverte tandis que la deuxième vanne 342 deux voies est fermée et le fluide caloporteur contourne le radiateur primaire 30 qui est alors inactif.

Le fluide caloporteur réchauffé circule dans la ligne de dérivation 320 jusqu'au dispositif de chauffage électrique 33 qui va assurer le réchauffement dudit fluide caloporteur. Le fluide caloporteur réchauffé est ensuite envoyé vers l'aérotherme 32 dans lequel il met en œuvre un échange thermique avec le flux d'air intérieur FA2. Le fluide caloporteur, plus chaud que le flux d'air intérieur FA2, cède des calories au flux d'air intérieur FA2 qui est ainsi réchauffé puis envoyé vers l'habitacle par l'intermédiaire d'au moins l'une des buses de sortie du boîtier 91.

Le fluide caloporteur refroidi sort ensuite de l'aérotherme 32 puis est renvoyé sur la première ligne 310 du premier circuit 3 de fluide caloporteur, vers l'organe de mise en circulation 31.

Dans le deuxième circuit 4 de fluide caloporteur, le cheminement du fluide caloporteur est sensiblement identique à celui précédemment exposé en référence à la figure 4, c'est-à-dire que le fluide caloporteur est mis en circulation par l'élément de mise en circulation 41 puis traverse le deuxième échangeur thermique 22, et éventuellement l'échangeur de chaleur 43 thermiquement couplé à au moins un élément de la chaîne de traction électrique du véhicule automobile.

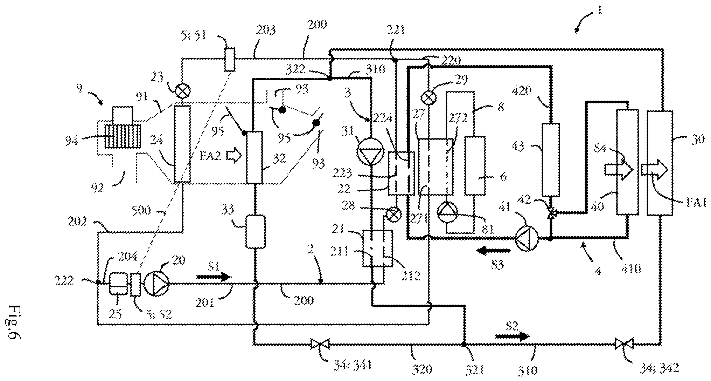

La figure 6 représente un deuxième mode de réalisation du système de traitement thermique 1 dans lequel le premier circuit 3 de fluide caloporteur et deuxième circuit 4 de fluide caloporteur sont identiques à ce qui a précédemment été exposé en référence aux figures 1 à 5, le premier circuit 3 de fluide caloporteur et le deuxième circuit 4 de fluide caloporteur étant distincts et indépendants l'un de l'autre.

La boucle 2 de fluide réfrigérant est sensiblement identique à ce qui a été précédemment exposé en référence au premier mode de réalisation, elle se distingue néanmoins de ce dernier en ce qu'elle comprend un organe de détente additionnel 28 en lieu, ou en plus, de la bouteille 26 disposée entre le premier échangeur thermique 21 et le deuxième échangeur thermique 22, sur la branche principale 200 de la boucle 2 de fluide réfrigérant.

Ainsi dans l'exemple illustré, la boucle 2 de fluide réfrigérant comprend successivement, selon le sens de circulation S1 du fluide réfrigérant dans la boucle 2 de fluide réfrigérant, le dispositif de compression 20, le premier échangeur thermique 21, l'organe de détente additionnel 28 et le deuxième échangeur thermique 22. Selon une alternative non représentée, la boucle 2 de fluide réfrigérant peut successivement comprendre, selon le sens de circulation S1 du fluide réfrigérant dans la boucle 2 de fluide réfrigérant, le dispositif de compression 20, le premier échangeur thermique 21, la bouteille 26, l'organe de détente additionnel 28 et le deuxième échangeur thermique 22, de sorte à assurer que seule une portion liquide du fluide réfrigérant sortant du premier échangeur thermique 21 est envoyée vers l'organe de détente additionnel 28.

Lorsque le système de traitement thermique 1 est réalisé selon ce deuxième mode de réalisation, il peut être utilisé afin de mettre en œuvre un mode refroidissement de l'habitacle ou un mode refroidissement de l'habitacle et refroidissement du dispositif de stockage électrique 6, non représentés, tel qu'ils ont été précédemment exposés pour le premier mode de réalisation en référence aux figures 4 et 5 respectivement. Les descriptions faites en référence à ces figures sont transposables au système de traitement thermique 1 réalisé selon le présent mode de réalisation à la différence qu'en lieu, ou en plus, de la bouteille 26 la boucle 2 de fluide réfrigérant comprend l'organe de détente additionnel 28. En mode refroidissement de l'habitacle ou en mode refroidissement de l'habitacle et refroidissement du dispositif de stockage électrique 6, l'organe de détente additionnel 28 est alors ouvert et laisse passer le fluide réfrigérant en direction du deuxième échangeur thermique 22 sans en assurer la détente de sorte que le cheminement et les changements d'état du fluide réfrigérant dans la boucle 2 de fluide réfrigérant sont strictement identiques à ceux précédemment exposés.

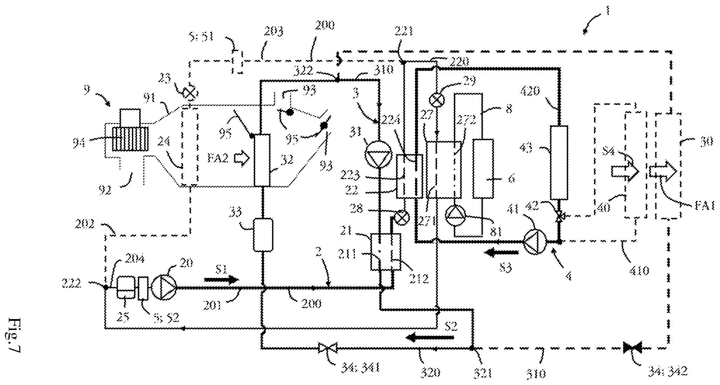

Lorsque le système de traitement thermique 1 selon le présent mode de réalisation met en œuvre le mode chauffage et récupération de calories, il peut aussi mettre en œuvre le refroidissement d'au moins l'un des éléments de la chaîne de la chaîne de traction électrique. Un tel mode de fonctionnement est représenté à la figure 7.

Dans la boucle 2 de fluide réfrigérant, le fluide réfrigérant quitte le dispositif de compression 20 sous haute pression, à haute température et à l'état gazeux en direction du premier échangeur thermique 21 qui fonctionne comme un condenseur. Tel que récemment exposé, le fluide réfrigérant cède des calories au fluide caloporteur circulant dans la deuxième passe 212 du premier échangeur thermique 21 et sort du premier échangeur thermique 21 à l'état essentiellement liquide, voire intégralement liquide. Le fluide réfrigérant refroidi est amené à l'organe de détente additionnel 28 au niveau duquel il subit une première détente. Le fluide réfrigérant sortant, à basse pression et basse température, est ensuite envoyé vers le deuxième échangeur thermique 22.

Dans le présent mode de fonctionnement, le deuxième échangeur thermique 22 fonctionne comme un évaporateur. Le fluide réfrigérant, plus froid que le fluide caloporteur circulant dans la deuxième passe 224 du deuxième échangeur thermique 22, capte les calories de ce dernier, et sort du deuxième échangeur thermique 22 réchauffé et à l'état au moins partiellement gazeux ou diphasique.

Avantageusement, le deuxième circuit 4 de fluide caloporteur permet de refroidir au moins l'un des éléments de la chaîne de traction disposé sur la deuxième conduite 420, par le biais de l'échangeur de chaleur 43 thermiquement couplé à au moins un élément de la chaîne de traction électrique du véhicule automobile.

Dans la boucle 2 de fluide réfrigérant, le fluide réfrigérant sortant du deuxième échangeur thermique 22 est ensuite amené au niveau du point de divergence 221. Dans le présent mode de fonctionnement, l'organe de détente primaire 23 est fermé de sorte à entraver la circulation du fluide réfrigérant dans le reste de la branche principale 200, tandis que l'organe de détente secondaire 29 est partiellement ouvert de sorte à permettre la circulation du fluide réfrigérant dans la branche secondaire 220 et à assurer la détente dudit fluide.

Le fluide réfrigérant est ainsi dirigé sur la branche secondaire 220 jusqu'à l'organe de détente secondaire 29 au niveau duquel il subit une deuxième détente, de niveau inférieur à la première détente mise en œuvre par l'organe de détente additionnel 28. Le fluide réfrigérant sort de l'organe de détente secondaire 29 à basse pression et à l'état liquide et est amené au quatrième échangeur thermique 27 dans lequel, tel que précédemment exposé, il capte les calories du fluide caloporteur circulant dans la deuxième passe 272 du quatrième échangeur thermique 27 de manière à permettre le refroidissement du dispositif de stockage électrique 6.

Tel que précédemment exposé, les calories cédées par le dispositif de stockage électrique 6 permettent de réchauffer le fluide réfrigérant de la boucle 2 de fluide réfrigérant en amont du dispositif de compression 20. Le fluide réfrigérant quitte ainsi le quatrième échangeur thermique 27 à l'état au moins partiellement gazeux et rejoint ensuite le point de convergence 222, puis le dispositif d'accumulation 25 sur la branche principale 200.

Alternativement, lorsque l'échauffement du dispositif de stockage électrique 6 est faible ou que la température de celui-ci est inférieure à la température mesurée au niveau de l'élément de la chaîne de traction électrique, l'organe de détente secondaire 29 peut être totalement ouvert de sorte à permettre la circulation du fluide réfrigérant le long de la branche secondaire 220 sans détendre celui-ci.

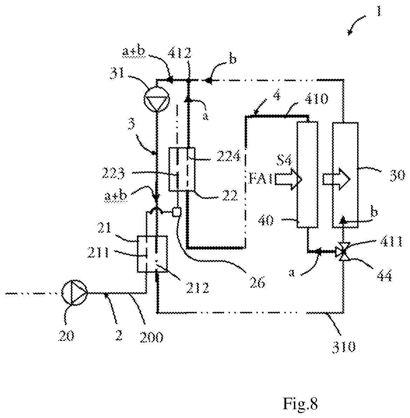

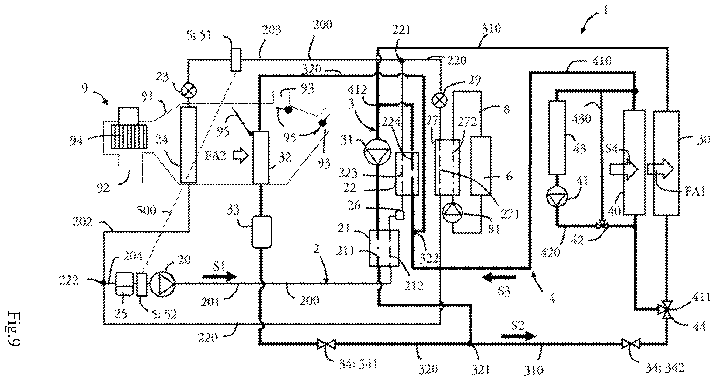

Les figures 8 à 13 illustrent un troisième mode de réalisation et un quatrième mode de réalisation du système de traitement thermique 1 dans lequel le premier circuit 3 de fluide caloporteur et le deuxième circuit 4 de fluide caloporteur sont interconnectés. La figure 8 illustre en partie le système de traitement thermique 1 selon le troisième mode de réalisation, tandis que la figure 9 représente l'ensemble de ce même système de traitement thermique 1.

La portion de système de traitement thermique 1 représentée à la figure 8 est sensiblement identique à celle précédemment décrite en référence à la figure 1, elle se distingue néanmoins de cette dernière de par l'agencement du deuxième circuit 4 de fluide caloporteur dans le système de traitement thermique 1.

La figure 8 montre que l'organe de mise en circulation 31 aspire un flux de fluide caloporteur illustré par a+b et pousse ce flux a+b dans la première ligne 310 du premier circuit 3 de fluide caloporteur. Au point de bifurcation 411, le fluide caloporteur se scinde en un premier flux a qui entre dans le deuxième circuit 4 de fluide caloporteur et un second flux b qui poursuit son trajet dans le premier circuit 3 de fluide caloporteur. Le premier flux a et le deuxième flux b sont joints au point de raccordement 412, avant de retourner vers l'organe de mise en circulation 31.

C'est ainsi que le deuxième circuit 4 de fluide caloporteur s'étend entre un point de bifurcation 411 et un point de raccordement 412. Le point de bifurcation 411 est disposé sur le premier circuit 3 de fluide caloporteur en amont du radiateur primaire 30 selon le sens de circulation S2 du fluide caloporteur dans le premier circuit 3 de fluide caloporteur. Plus spécifiquement, le point de bifurcation 411 est disposé entre le premier échangeur thermique 21 et le radiateur primaire 30. Le point de raccordement 412 est disposé sur le premier circuit 3 de fluide caloporteur, en amont du premier échangeur thermique 21 selon le sens de circulation S2 du fluide caloporteur dans le premier circuit 3 de fluide caloporteur. Plus précisément, le point de raccordement 412 est disposé entre le radiateur primaire 30 et le premier échangeur thermique 21.

Notamment, afin de contrôler la circulation du fluide caloporteur le long de la ligne principale du premier circuit 3 de fluide caloporteur et/ou le long de la première conduite 410 du deuxième circuit 4 de fluide caloporteur, le système de traitement thermique 1 comprend au moins un organe de régulation du débit 44 de fluide caloporteur agencé au point de bifurcation 411, tel qu'illustré, ou au point de raccordement 412. A titre d'exemple, l'organe de régulation du débit 44 de fluide réfrigérant peut être une vanne trois voies.

Alternativement, le système de traitement thermique 1 peut comprendre une pluralité d'organes de régulation du débit 44 du fluide caloporteur, par exemple des vannes deux voies, respectivement disposées sur la première ligne 310 du premier circuit 3 de fluide caloporteur et sur la première conduite 410 du deuxième circuit 4 de fluide caloporteur.

Le premier circuit 3 de fluide caloporteur et le deuxième circuit 4 de fluide caloporteur étant interconnectés, le système de traitement thermique 1 comprend l'organe de mise en circulation 31 du fluide caloporteur, disposé sur la première ligne 310 du premier circuit 3 de fluide caloporteur, mais peut être dépourvu de l'élément de mise en circulation 41 du deuxième circuit 4 de fluide caloporteur tel que précédemment exposé.

La figure 9 représente le système de traitement thermique 1 dans son ensemble, lorsque celui-ci est réalisé selon le troisième mode de réalisation tel que décrit en référence à la figure 8.

Dans ce troisième mode de réalisation, la boucle 2 de fluide réfrigérant est identique à celle précédemment décrite en référence aux figures 1 à 7 pour le premier et le deuxième mode de réalisation de la présente invention. Notamment, la boucle 6 de fluide caloporteur peut comprendre la bouteille 26 et/ou l'organe de détente additionnel tel que précédemment exposé. A des fins de clarté, dans les figures et descriptions ci-après, la boucle 2 de fluide réfrigérant comprendra seulement la bouteille 26.

Dans le premier circuit 3 de fluide caloporteur, la première ligne 310 est identique à celle précédemment exposée pour le premier et le deuxième mode de réalisation. La ligne de dérivation 320 comprend l'aérotherme 32, configuré pour mettre en œuvre un échange de chaleur entre le fluide caloporteur et le flux d'air intérieur FA2 envoyé dans l'habitacle du véhicule, et la ligne de dérivation 320 s'étend entre le point de séparation 321 et le point de jonction 322. Tel que précédemment exposé, le point de séparation 321 est disposé en aval du premier échangeur thermique 21 selon le sens de circulation S2 du fluide caloporteur dans le premier circuit 3 de fluide caloporteur, plus spécifiquement entre le premier échangeur thermique 21 et le radiateur primaire 30.

Le troisième mode de réalisation se distingue du premier et du deuxième mode de réalisation en ce que le point de jonction 322 de la ligne de dérivation 320 est disposé sur le deuxième circuit 4 de fluide caloporteur, en amont du deuxième échangeur thermique 22 selon le sens de circulation S3 du fluide caloporteur dans le deuxième circuit 4 de fluide caloporteur, le point de jonction 322 étant disposé entre le radiateur secondaire 40 et le deuxième échangeur thermique 22.

Dans le deuxième circuit 4 de fluide caloporteur, la deuxième conduite 420 comprend, tel que précédemment exposé, l'échangeur de chaleur 43 thermiquement couplé à au moins l'un des éléments de la chaîne de traction électrique du véhicule automobile et la deuxième conduite 420 diverge et converge de la première conduite 410 de part et d'autre du radiateur secondaire 40 respectivement. La troisième conduite 430 est placée quant à elle en parallèle de cet échangeur de chaleur 43 thermiquement couplé à au moins l'un des éléments de la chaîne de traction électrique et en parallèle du radiateur secondaire 40, de sorte à ce que le fluide caloporteur puisse contourner ces composants en fonction de la position prise par l'organe de régulation de débit 42.

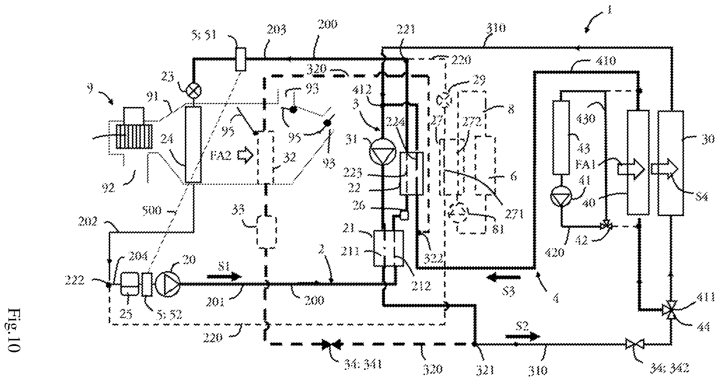

La figure 10 représente le système de traitement thermique 1 selon le troisième mode de réalisation lorsque celui-ci fonctionne selon un mode refroidissement de l'habitacle.

Dans un tel mode, l'architecture de la boucle 2 de fluide réfrigérant et le cheminement du fluide réfrigérant dans ladite boucle 2 sont identiques à ce qui a été précédemment décrit pour le système de traitement thermique 1 réalisé selon le premier mode de réalisation. Ainsi, la description de la boucle 2 de fluide réfrigérant faite pour le mode refroidissement de l'habitacle en référence à la figure 3 est transposable au présent mode de réalisation.

Concernant le premier circuit 3 de fluide caloporteur et le deuxième circuit 4 de fluide caloporteur, le fluide caloporteur est mis en circulation dans le premier circuit 3 de fluide caloporteur par l'organe de mise en circulation 31, le fluide caloporteur est envoyé vers le premier échangeur thermique 21 où il circule dans la deuxième passe 212 du premier échangeur thermique 21 et capte les calories du fluide réfrigérant, plus chaud, circulant dans la première passe 211 du premier échangeur thermique 21. Le fluide caloporteur sortant du premier échangeur thermique 21, réchauffé, est ensuite amené jusqu'au point de séparation 321.

Dans le présent mode de fonctionnement, les moyens de régulation du débit 34 du fluide caloporteur sont configurés pour entraver la circulation du fluide caloporteur vers la ligne de dérivation 320. La première vanne 341 deux voies est ainsi fermée tandis que la deuxième vanne 342 deux voies est ouverte.

Le fluide caloporteur circule ainsi le long de la première ligne 310 du premier circuit 3 de fluide caloporteur jusqu'au point de bifurcation 411. Dans le mode de réalisation illustré, l'organe de régulation du débit 44 du fluide caloporteur est ouvert de manière à permettre la circulation simultanée d'un premier flux de fluide caloporteur dans la première ligne 310 du premier circuit 3 de fluide caloporteur et d'un deuxième flux de fluide caloporteur dans la première conduite 410 du deuxième circuit 4 de fluide caloporteur. Le fluide caloporteur circule ainsi en parallèle dans le radiateur primaire 30 et dans le radiateur secondaire 40.

Le premier flux de fluide caloporteur, qui continue à circuler le long de la première ligne 310 du premier circuit 3 de fluide caloporteur, est envoyé vers le radiateur primaire 30. Le fluide caloporteur, plus chaud que le flux d'air extérieur FA1 à l'habitacle, cède des calories au flux d'air extérieur FA1 et est refroidi. Ce premier flux de fluide caloporteur circule ensuite le long de la première ligne 310 du premier circuit 3 de fluide caloporteur jusqu'à l'organe de mise en circulation 31.

Le deuxième flux de fluide caloporteur, envoyé dans la première conduite 410 du deuxième circuit 4 de fluide caloporteur, circule jusqu'au radiateur secondaire 40. Dans le radiateur secondaire 40, le fluide caloporteur, plus chaud que le flux d'air extérieur FA1, cède des calories à ce flux d'air extérieur FA1. Le fluide caloporteur refroidi circule dans la première conduite 410 du deuxième circuit 4 de fluide caloporteur jusqu'au deuxième échangeur thermique 22. Similairement à ce qui a été précédemment exposé pour le premier et le deuxième mode de réalisation, le fluide caloporteur circulant dans la deuxième passe 224 du deuxième échangeur thermique 22 capte les calories du fluide réfrigérant circulant dans la première passe 223 du deuxième échangeur thermique 22 et assure le sous-refroidissement de ce dernier.

Le fluide caloporteur sortant du deuxième échangeur thermique 22 est ensuite amené jusqu'au point de raccordement 412 au niveau duquel il rejoint la première ligne 310 du premier circuit 3 de fluide caloporteur, est réuni avec le premier flux de fluide caloporteur, puis est renvoyé vers l'organe de mise en circulation 31 du fluide caloporteur.

Le fluide caloporteur qui circule dans le radiateur secondaire est ainsi traversé par le flux d'air extérieur soumis à la température ambiante, c'est-à-dire la plus basse disponible dans l'air extérieur à l'habitacle. Le sous-refroidissement qui prend place dans le deuxième échangeur thermique 22 est donc assuré avec l'air le plus froid disponible.

Le flux d'air FA1 réchauffé par le radiateur secondaire 40 traverse le radiateur primaire 30 à une température qui permet néanmoins de réaliser la condensation du fluide réfrigérant au cœur du premier échangeur thermique 21.

Selon un exemple de ce présent mode de fonctionnement, l'élément de régulation du débit 42 de fluide caloporteur est placé dans une position où la deuxième conduite 420 est isolée du deuxième circuit 4 de fluide caloporteur. Une circulation peut néanmoins s'opérer dans une boucle formée par la troisième conduite 430 et par la deuxième conduite 420, par mise en fonctionnement de l'élément de mise ne circulation 41 du fluide caloporteur.

De manière alternative à cet exemple, l'élément de régulation du débit 42 de fluide caloporteur est placé dans une position où les calories captées au niveau de l'échangeur de chaleur 43 thermiquement couplé à au moins l'un des éléments de la chaîne de traction électrique sont déchargées dans le flux d'air extérieur FA1 par le truchement du radiateur secondaire 40.

Similairement, le système de traitement thermique 1 ne prend, dans le présent mode de fonctionnement, pas en charge le refroidissement du dispositif de stockage électrique 6.

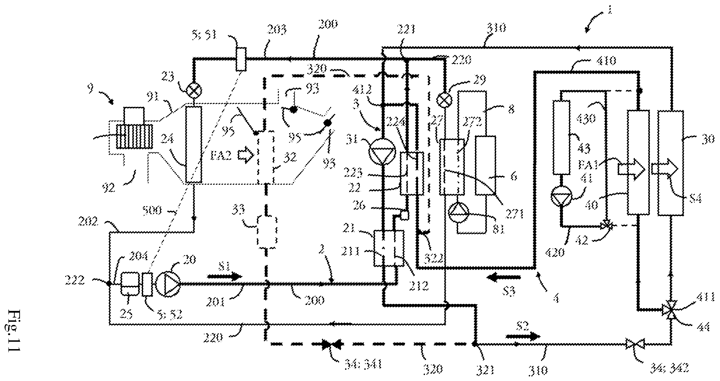

La figure 11 représente un exemple d'un deuxième mode de fonctionnement du système de traitement thermique 1 selon le troisième mode de réalisation lorsque celui-ci met en œuvre un mode refroidissement de l'habitacle et un mode refroidissement du dispositif de stockage électrique 6, par exemple mis en œuvre lors d'une phase de charge rapide dudit dispositif de stockage électrique 6.

Dans ce deuxième mode de fonctionnement, le cheminement du fluide caloporteur dans le premier circuit 3 de fluide caloporteur et dans le deuxième circuit 4 de fluide caloporteur est identique à celui précédemment exposé en référence à la figure 10 pour le mode refroidissement de l'habitacle du système de traitement thermique 1 selon le troisième mode de réalisation, la description faite du cheminement du fluide caloporteur dans ces deux circuits 3, 4 est ainsi transposable au présent mode de fonctionnement.

Ce deuxième mode de fonctionnement se distingue du premier mode de fonctionnement du système de traitement thermique 1 selon le troisième mode de réalisation en ce que le fluide réfrigérant sortant du deuxième échangeur thermique 22, sous-refroidi, est séparé en deux flux de fluide réfrigérant au niveau du point de divergence 221. Tel que précédemment exposé pour le mode refroidissement de l'habitacle et refroidissement du dispositif de stockage électrique 6 du premier mode de réalisation en référence à la figure 4, le premier flux de fluide réfrigérant continue à circuler sur la branche principale 200 tandis que le deuxième flux de fluide réfrigérant est envoyé sur la branche secondaire 220, vers l'organe de détente secondaire 29.

Le deuxième flux de fluide réfrigérant, liquide, est détendu dans l'organe de détente secondaire 29 puis est amené dans le quatrième échangeur thermique 27 dans lequel il capte des calories du fluide caloporteur circulant dans la deuxième passe 272 du quatrième échangeur thermique 27.

Le fluide réfrigérant quitte le quatrième échangeur à l'état au moins partiellement gazeux et rejoint le point de convergence 222 afin d'être dirigé vers le dispositif d'accumulation 25. Dans un même temps, tel qu'exposé ci-dessus, le fluide caloporteur qui a été refroidi dans le quatrième échangeur thermique 27 circule dans le troisième circuit de fluide caloporteur 8 de sorte à refroidir le dispositif de stockage électrique 6.

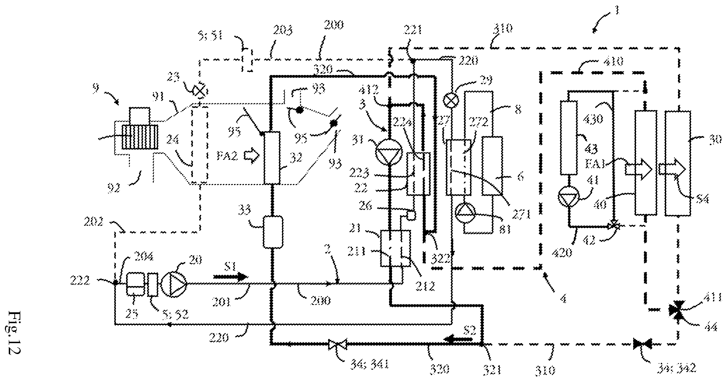

La figure 12 illustre un exemple d'un troisième mode de fonctionnement dans lequel le système de traitement thermique 1 selon le troisième mode de réalisation met simultanément en œuvre un mode chauffage du flux d'air intérieur FA2 envoyé vers l'habitacle et un mode de récupération de calories.

Concernant la description de la boucle 2 de fluide réfrigérant, le présent mode de fonctionnement est sensiblement identique au mode chauffage et récupération de calories précédemment exposé pour le premier mode de réalisation en référence à la figure 5, la description de la boucle 2 de fluide réfrigérant et du cheminement du fluide réfrigérant dans ladite boucle 2 est donc transposable au présent mode de réalisation.

Dans le premier circuit 3 de fluide caloporteur et le deuxième circuit 4 de fluide caloporteur, le fluide caloporteur est successivement mis en circulation par l'organe de mise en circulation 31, envoyé dans le premier échangeur thermique 21, dans lequel il capte les calories du fluide réfrigérant circulant dans la première passe 211 du premier échangeur thermique 21, puis est amené jusqu'au point de séparation 321 du premier circuit 3 de fluide caloporteur.

Lorsque le système de traitement thermique 1 fonctionne en mode chauffage et récupération de calories, la première vanne 341 deux voies est ouverte tandis que la deuxième vanne 342 deux voies est fermée, ces moyens de régulation du débit 34 du fluide caloporteur entravent la circulation du fluide caloporteur dans le reste de la première ligne 310 et envoient le fluide caloporteur vers la ligne de dérivation 320 du premier circuit de fluide réfrigérant de sorte à contourner le radiateur primaire 30 qui est alors inactif.

Le fluide caloporteur réchauffé circule dans la ligne de dérivation 320 jusqu'au dispositif de chauffage électrique 33 qui va assurer le chauffage additionnel dudit fluide caloporteur, puis le fluide caloporteur est amené dans l'aérotherme 32. Le fluide caloporteur, plus chaud que le flux d'air intérieur FA2, cède des calories au flux d'air intérieur FA2 qui est ainsi réchauffé puis envoyé vers l'habitacle par l'intermédiaire d'au moins l'une des buses de sortie du boîtier 91. Le fluide caloporteur refroidi sort ensuite de l'aérotherme 32 et circule le long de la ligne de dérivation 320 jusqu'au point de jonction 322.

Le fluide caloporteur est ensuite amené sur la première conduite 410 du deuxième circuit 4 de fluide caloporteur, entre le radiateur secondaire 40 et le deuxième échangeur thermique 22. Le fluide caloporteur circule dans la deuxième passe 224 du deuxième échangeur thermique 22 au sein duquel il met en œuvre un échange thermique avec le fluide réfrigérant circulant dans la première passe 223 du deuxième échangeur thermique 22. Le fluide caloporteur capte les calories dudit fluide réfrigérant de sorte à permettre le sous-refroidissement de ce dernier puis le fluide caloporteur circule le long de la première conduite 410 jusqu'au point de raccordement 412 et est renvoyé sur la première ligne 310 du premier circuit 3 de fluide caloporteur vers l'organe de mise en circulation 31.

Selon un exemple de ce présent mode de fonctionnement, l'élément de régulation du débit 42 de fluide caloporteur est placé dans une position où la deuxième conduite 420 est isolée du deuxième circuit 4 de fluide caloporteur. Une circulation peut néanmoins s'opérer dans une boucle formée par la troisième conduite 430 et par la deuxième conduite 420, par mise en fonctionnement de l'élément de mise ne circulation 41 du fluide caloporteur.

De manière alternative à cet exemple, l'élément de régulation du débit 42 de fluide caloporteur est placé dans une position où les calories captées au niveau de l'échangeur de chaleur 43 thermiquement couplé à au moins l'un des éléments de la chaîne de traction électrique sont déchargées dans le flux d'air extérieur FA1 par le truchement du radiateur secondaire 40.

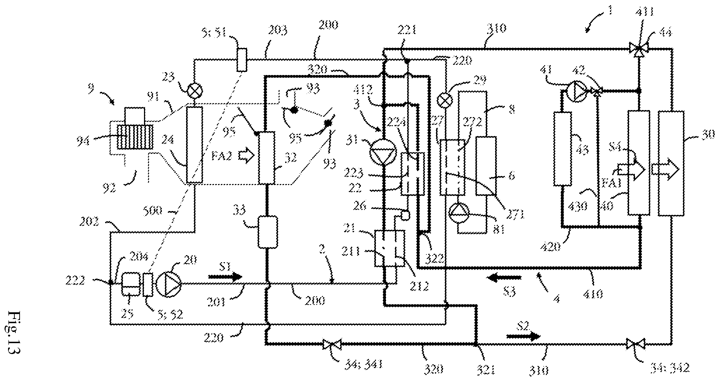

La figure 13 représente le système de traitement lorsque celui-ci est réalisé selon le quatrième mode de réalisation de la présente invention. Ce quatrième mode de réalisation est sensiblement identique au troisième mode de réalisation, représenté aux figures 8 à 12. Aussi, la description du système de traitement thermique 1 selon le troisième mode de réalisation, faite en référence à la figure 9 est transposable au présent mode de réalisation. Ce quatrième mode de réalisation se distingue du troisième mode par le positionnement du point de bifurcation 411 de la première conduite 410 du deuxième circuit 4 de fluide caloporteur.

Dans ce quatrième mode de réalisation, le point de bifurcation 411 est disposé en aval du radiateur primaire 30 selon le sens de circulation S2 du fluide caloporteur dans le premier circuit 3 de fluide caloporteur, le point de bifurcation 411 étant disposé entre le radiateur primaire 30 et le premier échangeur thermique 21. Tel que précédemment exposé, le contrôle de la circulation du fluide caloporteur dans la première ligne 310 du premier circuit 3 de fluide caloporteur et/ou dans la première conduite 410 du deuxième circuit 4 de fluide caloporteur est mis en œuvre par au moins un organe de régulation du débit 44 de fluide caloporteur, tel qu'une vanne trois voies, pouvant, à titre d'exemple, être disposé au niveau du point de bifurcation 411 ou du point de raccordement 412. Alternativement, le système de traitement thermique 1 peut comprendre une pluralité d'organe de régulation du débit 44 de fluide caloporteur disposés sur la première conduite 410 et sur la première ligne 310.

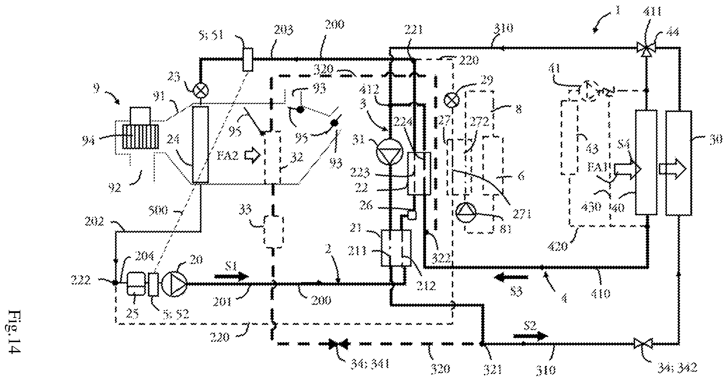

La figure 14 illustre un exemple de fonctionnement du système de traitement thermique 1 selon le quatrième mode de réalisation lorsque celui-ci met en œuvre un mode refroidissement de l'habitacle.

Dans un tel mode, l'architecture de la boucle 2 de fluide réfrigérant et le cheminement du fluide réfrigérant dans ledit circuit sont identiques à ce qui a été précédemment décrit pour le système de traitement thermique 1 réalisé selon le troisième mode de réalisation fonctionnant selon le mode refroidissement, ainsi, la description faite en référence à la figure 10 est transposable au présent mode de réalisation.

Concernant le premier circuit 3 de fluide caloporteur et le deuxième circuit 4 de fluide caloporteur, le cheminement du fluide caloporteur est également identique entre l'organe de mise en circulation 31 et le point de séparation 321.

Les moyens de régulation du débit 34 du fluide caloporteur sont configurés pour entraver la circulation du fluide caloporteur vers la ligne de dérivation 320. La première vanne 341 deux voies est ainsi fermée tandis que la deuxième vanne 342 deux voies est ouverte. Le fluide caloporteur circule le long de la première ligne 310 du premier circuit 3 de fluide caloporteur jusqu'au radiateur primaire 30 au niveau duquel le fluide caloporteur, plus chaud que le flux d'air extérieur FA1 à l'habitacle, cède des calories au flux d'air extérieur FA1. Le fluide caloporteur sortant, refroidi, circule ensuite le long de la première ligne 310 du premier circuit 3 de fluide caloporteur jusqu'au point de bifurcation 411.

Dans le présent mode de fonctionnement, l'organe de régulation du débit 44 de fluide caloporteur est ouvert de manière à permettre simultanément la circulation du fluide caloporteur le long du reste de la première ligne 310 du premier circuit 3 de fluide caloporteur et le long de la première conduite 410 du deuxième circuit 4 de fluide caloporteur.

De par l'architecture du système de traitement thermique 1 selon le quatrième mode de réalisation, au lieu d'une circulation en parallèle simultanée d'un premier flux de fluide caloporteur et d'un deuxième flux de fluide caloporteur dans le radiateur secondaire 40 et le radiateur primaire 30 respectivement, tel qu'observé dans le troisième mode de réalisation, le premier flux de fluide caloporteur continue à circuler le long de la première ligne 310 du premier circuit 3 de fluide caloporteur en direction de l'organe de mise en circulation 31 tandis que le deuxième flux de fluide caloporteur est envoyé sur la première conduite 410 du deuxième circuit 4 de fluide caloporteur, en direction du radiateur secondaire 40.

Il résulte de la présente architecture que le deuxième flux de fluide caloporteur est avantageusement, impliqué dans deux échanges thermiques successifs avec le flux d'air extérieur FA1, respectivement dans le radiateur primaire 30 puis dans le radiateur secondaire 40. Le fluide caloporteur ayant été refroidi une première fois dans le radiateur primaire 30, le pincement de températures mesuré dans le radiateur secondaire est plus réduit. Avantageusement et de sorte à optimiser le refroidissement du fluide caloporteur, l'organe de régulation du débit 44 de fluide caloporteur peut être configuré de sorte que le deuxième flux de fluide caloporteur circule à un débit plus réduit dans la première conduite 410, et donc dans le radiateur secondaire 40. Le deuxième flux de fluide caloporteur refroidi est ensuite, tel que précédemment exposé, envoyé le long de la première conduite 410 jusqu'au deuxième échangeur thermique 22, dans lequel il permet le sous-refroidissement du fluide réfrigérant circulant dans la première passe 223 du deuxième échangeur thermique 22. Le deuxième flux de fluide caloporteur rejoint ensuite, tel que précédemment exposé, le premier flux de fluide caloporteur au niveau du point de raccordement 412 disposé dans la première ligne 310 du premier circuit 3 de fluide caloporteur puis est renvoyé vers l'organe de mise en circulation 31.

De par les deux refroidissements successifs du fluide caloporteur dans le radiateur primaire et le radiateur secondaire, mais également de par la réduction du débit du deuxième flux de fluide caloporteur, ce quatrième mode de réalisation permet de maximiser le sous-refroidissement du fluide réfrigérant tout en minimisant les coûts d'exploitation du système de traitement thermique 1, et notamment des besoins en utilité du deuxième échangeur thermique 22.

Le système de traitement thermique 1 selon le quatrième mode de réalisation peut également mettre en œuvre le mode refroidissement de l'habitacle et refroidissement du dispositif de stockage électrique 6, non représenté, tel que précédemment exposé pour le troisième mode de réalisation en référence à la figure 10.

Dans un tel mode de fonctionnement, la boucle 2 de fluide réfrigérant fonctionne de façon similaire à ce qui a été exposé pour le troisième mode de fonctionnement. Aussi, la description de la boucle 2 de fluide réfrigérant et du cheminement du fluide réfrigérant dans ladite boucle 2 faite en référence à la figure 10 peut être transposée au présent quatrième mode de réalisation. De même, la circulation du fluide caloporteur dans le premier circuit 3 de fluide caloporteur et dans le deuxième circuit 4 de fluide caloporteur est identique à ce qui a été décrit dans le mode refroidissement de l'habitacle du quatrième mode de réalisation, en référence à la figure 14 du présent document.

Le système de traitement thermique 1 selon le quatrième mode de réalisation peut également mettre en œuvre le mode chauffage et récupération de calories, non représenté, tel qu'exposé ci-dessus pour le troisième mode de réalisation en référence à la figure 12. La boucle 2 de fluide réfrigérant, le premier circuit 3 de fluide caloporteur et le deuxième circuit 4 de fluide caloporteur fonctionnant de façon similaire à ce qui a été exposé pour le troisième mode de fonctionnement, la description faite en référence à la figure 12 et au troisième mode de réalisation peut être intégralement transposée au présent quatrième mode de réalisation.

La présente invention propose ainsi un système de traitement thermique comprenant une boucle de fluide réfrigérant, un premier circuit de fluide caloporteur et un deuxième circuit de fluide caloporteur, la première boucle de fluide caloporteur comprenant un radiateur primaire et le deuxième circuit de fluide caloporteur comprenant un radiateur secondaire, le radiateur primaire étant disposé en aval du radiateur secondaire selon un sens de circulation du flux d'air extérieur au travers desdits radiateurs. Le premier circuit de fluide caloporteur comprend notamment au moins un premier échangeur thermique configuré pour fonctionner en tant que condenseur du fluide réfrigérant circulant dans la boucle de fluide réfrigérant tandis que le deuxième circuit de fluide caloporteur comprend au moins un deuxième échangeur thermique configuré pour mettre en œuvre le sous-refroidissement du fluide réfrigérant circulant dans cette même boucle de fluide réfrigérant.

La présente invention ne saurait toutefois se limiter aux moyens et configurations décrits et illustrés ici et elle s'étend également à toute combinaison techniquement opérante de tels moyens. En particulier, l'architecture de la boucle de fluide réfrigérant et l'architecture du premier circuit de fluide caloporteur et/ou du deuxième circuit de fluide caloporteur peuvent être modifiées sans nuire à l'invention dans la mesure où elles permettent de remplir les fonctionnalités du système de traitement thermique 1 décrites et illustrées dans le présent document.

## Revendications

1. Système de traitement thermique (1) destiné à un véhicule comprenant au moins une boucle (2) de fluide réfrigérant, un premier circuit (3) de fluide caloporteur et un deuxième circuit (4) de fluide caloporteur,
- la boucle (2) de fluide réfrigérant comprenant au moins un premier échangeur thermique (21) et un deuxième échangeur thermique (22) tous deux configurés pour mettre en œuvre un échange thermique entre le fluide réfrigérant et le fluide caloporteur qui circule respectivement dans le premier circuit (3) ou dans le deuxième circuit (4) de fluide caloporteur, la boucle (2) de fluide réfrigérant comprenant un troisième échangeur thermique (24) configuré pour mettre en œuvre un échange thermique entre le fluide réfrigérant et un flux d'air intérieur (FA2) envoyé dans l'habitacle du véhicule,
- le premier circuit (3) de fluide caloporteur comprenant le premier échangeur thermique (21) et au moins un radiateur primaire (30) configuré pour mettre en œuvre un échange de chaleur entre un flux d'air extérieur (FA1) à l'habitacle du véhicule et le fluide caloporteur,
- le deuxième circuit (4) de fluide caloporteur comprenant le deuxième échangeur thermique (22) et au moins un radiateur secondaire (40) configuré pour mettre en œuvre un échange de chaleur entre le flux d'air extérieur (FA1) et le fluide caloporteur,
le radiateur primaire (30) étant disposé en aval du radiateur secondaire (40) selon un sens de circulation (S4) du flux d'air extérieur (FA1) au travers desdits radiateurs (30, 40),
système de traitement thermique (1) dans lequel la boucle (2) de fluide réfrigérant est une boucle fermée , **caractérisé en ce que** ladite boucle fermée comprend au moins une branche principale (200) sur laquelle sont successivement agencés au moins un dispositif de compression (20), le premier échangeur thermique (21), le deuxième échangeur thermique (22), au moins un organe de détente, dit organe de détente primaire (23), et au moins le troisième échangeur thermique (24).

2. Système de traitement thermique (1) selon la revendication précédente, dans lequel la boucle (2) de fluide réfrigérant comprend une bouteille (26) et/ou un organe de détente additionnel (28) disposé(e)(s) entre le premier échangeur thermique (21) et le deuxième échangeur thermique (22).

3. Système de traitement thermique (1) selon la revendication 1 ou 2, dans lequel la boucle (2) de fluide réfrigérant comprend une branche secondaire (220) qui s'étend depuis un premier point de divergence (221), disposé entre le deuxième échangeur thermique (22) et l'organe de détente primaire (23), et un premier point de convergence (222) disposé entre le troisième échangeur thermique (24) et le dispositif de compression (20), la branche secondaire (220) comprenant au moins un organe de détente secondaire (223) et un quatrième échangeur thermique (27) couplé thermiquement à un dispositif de stockage électrique (6) du véhicule.

4. Système de traitement thermique (1) selon l'une quelconque des revendications précédentes, dans lequel le deuxième circuit (4) de fluide caloporteur comprend au moins une première conduite (410) comportant au moins le radiateur secondaire (40), un élément de mise en circulation (41) du fluide caloporteur dans le deuxième circuit et le deuxième échangeur thermique (22), le deuxième circuit (4) de fluide caloporteur comprenant au moins une deuxième conduite (420) en dérivation de la première conduite (410), la deuxième conduite (420) comprenant un échangeur de chaleur (43) thermiquement couplé à au moins un élément de la chaîne de traction électrique du véhicule.

5. Système de traitement thermique (1) selon l'une quelconque des revendications précédentes, dans lequel le premier circuit (3) de fluide caloporteur comprend au moins une première ligne (310) sur laquelle sont au moins agencés le radiateur primaire (30), le premier échangeur thermique (21) et un organe de mise en circulation (31) du fluide caloporteur dans le premier circuit (3) de fluide caloporteur.

6. Système de traitement thermique (1) selon la revendication 5, dans lequel le premier circuit (3) de fluide caloporteur et le deuxième circuit (4) de fluide caloporteur sont distincts.

7. Système de traitement thermique (1) selon la revendication 6, dans lequel le premier circuit (3) de fluide caloporteur comprend au moins une ligne de dérivation (320) qui comprend un aérotherme (32) configuré pour mettre en œuvre un échange de chaleur entre le fluide caloporteur et le flux d'air intérieur (FA2) envoyé dans l'habitacle du véhicule, la ligne de dérivation (320) s'étendant entre un point de séparation (321) et un point de jonction (322), le point de séparation (321) étant en aval du premier échangeur thermique (21) selon le sens de circulation (S2) du fluide caloporteur dans le premier circuit (3) de fluide caloporteur et le point de séparation (321) étant disposé entre le premier échangeur thermique (21) et le radiateur primaire (30), le point de jonction (322) étant en amont du premier échangeur thermique (21) selon le sens de circulation (S2) du fluide caloporteur dans le premier circuit (3) de fluide caloporteur et le point de jonction (322) étant disposé entre le radiateur primaire (30) et le premier échangeur thermique (21).

8. Système de traitement thermique (1) selon la revendication 5, dans lequel le premier circuit (3) de fluide caloporteur et le deuxième circuit (4) de fluide caloporteur sont interconnectés.

9. Système de traitement thermique (1) selon la revendication précédente, dans lequel le premier circuit (3) de fluide caloporteur comprend au moins une ligne de dérivation (320) comportant un aérotherme (32) configuré pour mettre en œuvre un échange de chaleur entre le fluide caloporteur et le flux d'air intérieur (FA2) envoyé dans l'habitacle du véhicule, la ligne de dérivation (320) s'étendant entre un point de séparation (321) et un point de jonction (322), le point de séparation (321) étant en aval du premier échangeur thermique (21) selon le sens de circulation (S2) du fluide caloporteur dans le premier circuit (3) de fluide caloporteur et le point de séparation (321) étant disposé entre le premier échangeur thermique (21) et le radiateur primaire (30), le point de jonction (322) étant disposé sur le deuxième circuit (4) de fluide caloporteur, en amont du deuxième échangeur thermique (22) selon le sens de circulation (S3) du fluide caloporteur dans le deuxième circuit (4) de fluide caloporteur, le point de jonction (322) étant disposé entre le radiateur secondaire (40) et le deuxième échangeur thermique (22).

10. Système de traitement thermique (1) selon la revendication 8 ou 9, dans lequel le deuxième circuit (4) de fluide caloporteur s'étend entre un point de bifurcation (411) et un point de raccordement (412), le point de raccordement (412) étant disposé sur le premier circuit (3) de fluide caloporteur, en amont du premier échangeur thermique (21) selon le sens de circulation (S2) du fluide caloporteur dans le premier circuit (3) de fluide caloporteur, le point de raccordement (412) étant disposé entre le radiateur primaire (30) et le premier échangeur thermique (21), et le point de bifurcation (411) étant disposé sur le premier circuit (3) de fluide caloporteur soit en amont du radiateur primaire (30) selon le sens de circulation (S2) du fluide caloporteur dans le premier circuit (3) de fluide caloporteur, le point de bifurcation (411) étant disposé entre le premier échangeur thermique (21) et le radiateur primaire (30), soit en aval du radiateur primaire (30) selon le sens de circulation (S2) du fluide caloporteur dans le premier circuit (3) de fluide caloporteur, le point de bifurcation (411) étant disposé entre le radiateur primaire (30) et le premier échangeur thermique (21).

## Patentansprüche

1. Wärmebehandlungssystem (1) für ein Fahrzeug, das mindestens eine Kühlmittelschleife (2), einen ersten Wärmeübertragungsmediumkreislauf (3) und einen zweiten Wärmeübertragungsmediumkreislauf (4) umfasst,
- wobei die Kühlmittelschleife (2) mindestens einen ersten Wärmetauscher (21) und einen zweiten Wärmetauscher (22) umfasst, die beide dazu ausgestaltet sind, einen Wärmetausch zwischen dem Kühlmittel und dem Wärmeübertragungsmedium, die in dem ersten Wärmeübertragungsmediumkreislauf (3) bzw. in dem zweiten Wärmeübertragungsmediumkreislauf (4) umlaufen, zu realisieren, wobei die Kühlmittelschleife (2) einen dritten Wärmetauscher (24) umfasst, der dazu ausgestaltet ist, einen Wärmeaustausch zwischen dem Kühlmittel und einem inneren Luftstrom (FA2), der in den Fahrgastraum des Fahrzeugs geleitet wird, zu realisieren,
- wobei der erste Wärmeübertragungsmediumkreislauf (3) den ersten Wärmetauscher (21) und mindestens einen Primärkühler (30) umfasst, der dazu ausgestaltet ist, einen Wärmeaustausch zwischen einem Luftstrom (FA1) außerhalb des Fahrgastraums des Fahrzeugs und dem Wärmeübertragungsmedium zu realisieren,
- wobei der zweite Wärmeübertragungsmediumkreislauf (4) den zweiten Wärmetauscher (22) und mindestens einen Sekundärkühler (40) umfasst, der dazu ausgestaltet ist, einen Wärmeaustausch zwischen dem Außenluftstrom (FA1) und dem Wärmeübertragungsmedium zu realisieren,
wobei der Primärkühler (30) stromabwärts von dem Sekundärkühler (40) in einer Umlaufrichtung (S4) des Außenluftstroms (FA1) durch diese Kühler (30, 40) angeordnet ist,
wobei bei dem Wärmebehandlungssystem (1) die Kühlmittelschleife (2) eine Schleife ohne Ausgang ist, **dadurch gekennzeichnet, dass** die Schleife ohne Ausgang mindestens einen Hauptzweig (200) umfasst, an dem nacheinander mindestens eine Verdichtungsvorrichtung (20), der erste Wärmetauscher (21), der zweite Wärmetauscher (22), mindestens ein Expansionselement, das primäres Expansionselement (23) genannt wird, und mindestens der dritte Wärmetauscher (24) angeordnet sind.

2. Wärmebehandlungssystem (1) nach dem vorhergehenden Anspruch, wobei die Kühlmittelschleife (2) eine Flasche (26) und/oder ein zusätzliches Expansionselement (28) umfasst, das bzw. die zwischen dem ersten Wärmetauscher (21) und dem zweiten Wärmetauscher (22) angeordnet ist.

3. Wärmebehandlungssystem (1) nach Anspruch 1 oder 2, wobei die Kühlmittelschleife (2) einen Sekundärzweig (220) umfasst, der sich zwischen einem ersten Divergenzpunkt (221), der zwischen dem zweiten Wärmetauscher (22) und dem primären Expansionselement (23) angeordnet ist, und einem ersten Konvergenzpunkt (222), der zwischen dem dritten Wärmetauscher (24) und der Verdichtungsvorrichtung (20) angeordnet ist, erstreckt, wobei der Sekundärzweig (220) mindestens ein sekundäres Expansionselement (223) und einen vierten Wärmetauscher (27) umfasst, der thermisch an eine elektrische Speichervorrichtung (6) des Fahrzeugs gekoppelt ist.

4. Wärmebehandlungssystem (1) nach einem der vorhergehenden Ansprüche, wobei der zweite Wärmeübertragungsmediumkreislauf (4) mindestens eine erstes Rohr (410), das mindestens den Sekundärkühler (40) aufweist, ein Element (41) zum Zirkulieren des Wärmeübertragungsmediums in dem zweiten Kreislauf und den zweiten Wärmetauscher (22) umfasst, wobei der zweite Wärmeübertragungsmediumkreislauf (4) mindestens ein zweites Rohr (420) umfasst, das von dem ersten Kanal (410) abzweigt, wobei das zweite Rohr (420) einen Wärmetauscher (43) umfasst, der an mindestens ein Element des elektrischen Antriebsstrangs des Fahrzeugs thermisch gekoppelt ist.

5. Wärmebehandlungssystem (1) nach einem der vorhergehenden Ansprüche, wobei der erste Wärmeübertragungsmediumkreislauf (3) mindestens eine erste Leitung (310) umfasst, auf der mindestens der Primärkühler (30), der erste Wärmetauscher (21) und ein Element (31) zum Zirkulieren des Wärmeübertragungsmediums in dem ersten Wärmeübertragungsmediumkreislauf (3) angeordnet sind.

6. Wärmebehandlungssystem (1) nach Anspruch 5, wobei der erste Wärmeübertragungsmediumkreislauf (3) und der zweite Wärmeübertragungsmediumkreislauf (4) separat sind.

7. Wärmebehandlungssystem (1) nach Anspruch 6, wobei der erste Wärmeübertragungsmediumkreislauf (3) mindestens eine Abzweigleitung (320) umfasst, die einen Thermoblock (32) umfasst, der dazu ausgestaltet ist, den Wärmeaustausch zwischen dem Wärmeübertragungsmedium und dem in den Fahrgastraum des Fahrzeugs geleiteten internen Luftstrom (FA2) zu realisieren, wobei sich die Abzweigleitung (320) zwischen einer Trennstelle (321) und einer Anschlussstelle (322) erstreckt, wobei die Trennstelle (321) in Umlaufrichtung (S2) des Wärmeübertragungsmediums in dem ersten Wärmeübertragungsmediumkreislauf (3) stromabwärts von dem ersten Wärmetauscher (21) liegt, und die Trennstelle (321) zwischen dem ersten Wärmetauscher (21) und dem Primärkühler (30) angeordnet ist, wobei die Anschlussstelle (322) in Umlaufrichtung (S2) des Wärmeübertragungsmediums in dem ersten Wärmeübertragungsmediumkreislauf (3) stromaufwärts von dem ersten Wärmetauscher (21) liegt, und die Anschlussstelle (322) zwischen dem Primärkühler (30) und dem ersten Wärmetauscher (21) angeordnet ist.

8. Wärmebehandlungssystem (1) nach Anspruch 5, wobei der erste Wärmeübertragungsmediumkreislauf (3) und der zweite Wärmeübertragungsmediumkreislauf (4) verbunden sind.

9. Wärmebehandlungssystem (1) nach dem vorhergehenden Anspruch, wobei der erste Wärmeübertragungsmediumkreislauf (3) mindestens eine Abzweigleitung (320) umfasst, die einen Thermoblock (32) aufweist, der dazu ausgestaltet ist, einen Wärmeaustausch zwischen dem Wärmeübertragungsmedium und dem in den Fahrgastraum des Fahrzeugs geleiteten internen Luftstrom (FA2) zu realisieren, wobei sich die Abzweigleitung (320) zwischen einer Trennstelle (321) und einer Anschlussstelle (322) erstreckt, wobei die Trennstelle (321)in Umlaufrichtung (S2) des Wärmeübertragungsmediums in dem ersten Wärmeübertragungsmediumkreislauf (3) stromabwärts von dem ersten Wärmetauscher (21) liegt, und die Trennstelle (321) zwischen dem ersten Wärmetauscher (21) und dem Primärkühler (30) angeordnet ist, wobei die Anschlussstelle (322) in Umlaufrichtung (S3) des Wärmeübertragungsmediums in dem zweiten Wärmeübertragungsmediumkreislauf (4) stromaufwärts von dem zweiten Wärmetauscher (22) liegt, wobei die Anschlussstelle (322) zwischen dem Sekundärkühler (40) und dem zweiten Wärmetauscher (22) angeordnet ist.

10. Wärmebehandlungssystem (1) nach Anspruch 8 oder 9, wobei sich der zweite Wärmeübertragungsmediumkreislauf (4) zwischen einer Gabelungsstelle (411) und einer Verbindungsstelle (412) erstreckt, wobei die Verbindungsstelle (412) in Umlaufrichtung (S2) des Wärmeübertragungsmediums in dem ersten Wärmeübertragungsmediumkreislauf (3) stromaufwärts von dem ersten Wärmetauscher (21) auf dem ersten Wärmeübertragungsmediumkreislauf (3) angeordnet ist, wobei die Verbindungsstelle (412) zwischen dem Primärkühler (30) und dem ersten Wärmetauscher (21) angeordnet ist, und die Gabelungsstelle (411) auf dem ersten Wärmeübertragungsmediumkreislauf (3) entweder in Umlaufrichtung (S2) des Wärmeübertragungsmediums in dem ersten Wärmeübertragungsmediumkreislauf (3) stromaufwärts von dem Primärkühler (30) angeordnet ist, wobei die Gabelungsstelle (411) zwischen dem ersten Wärmetauscher (21) und dem Primärkühler (30) angeordnet ist, oder in Umlaufrichtung (S2) des Wärmeübertragungsmediums in dem ersten Wärmeübertragungsmediumkreislauf (3) stromabwärts von dem Primärkühler (30) angeordnet ist, wobei die Gabelungsstelle (411) zwischen dem Primärkühler (30) und dem ersten Wärmetauscher (21) angeordnet ist.

## Claims

1. Temperature management system (1) intended for a vehicle comprising at least one refrigerant loop (2), a first heat-transfer fluid circuit (3) and a second heat-transfer fluid circuit (4),
- the refrigerant loop (2) comprising at least a first heat exchanger (21) and a second heat exchanger (22) both configured to perform an exchange of heat between the refrigerant and the heat-transfer fluid circulating respectively in the first heat-transfer fluid circuit (3) or in the second heat-transfer fluid circuit (4), the refrigerant loop (2) comprising a third heat exchanger (24) configured to perform an exchange of heat between the refrigerant and a flow (FA2) of interior air sent into the interior of the vehicle,
- the first heat-transfer fluid circuit (3) comprising the first heat exchanger (21) and at least one primary radiator (30) configured to perform an exchange of heat between a flow (FA1) of air external to the interior of the vehicle and the heat-transfer fluid,
- the second heat-transfer fluid circuit (4) comprising the second heat exchanger (22) and at least one secondary radiator (40) configured to perform an exchange of heat between the flow (FA1) of exterior air and the heat-transfer fluid,
the primary radiator (30) being positioned downstream of the secondary radiator (40) in a direction (S4) of circulation of the flow (FA1) of exterior air through said radiators (30, 40),
in which temperature management system (1) the refrigerant loop (2) is a closed loop, **characterized in that** said closed loop comprises at least a main leg (200) on which at least a compression device (20), the first heat exchanger (21), the second heat exchanger (22), at least one expansion member referred to as primary expansion member (23), and at least the third heat exchanger (24) are successively arranged.

2. Temperature management system (1) according to the preceding claim, wherein the refrigerant loop (2) comprises a bottle (26) and/or an additional expansion member (28) arranged between the first heat exchanger (21) and the second heat exchanger (22).

3. Temperature management system (1) according to Claim 1 or 2, wherein the refrigerant loop (2) comprises a secondary leg (220) which extends from a first point of divergence (221), positioned between the second heat exchanger (22) and the primary expansion member (23), and a first point of convergence (222) positioned between the third heat exchanger (24) and the compression device (20), the secondary leg (220) comprising at least a secondary expansion member (223) and a fourth heat exchanger (27) which is thermally coupled to an electrical storage device (6) of the vehicle.

4. Temperature management system (1) according to any one of the preceding claims, wherein the second heat-transfer fluid circuit (4) comprises at least a first pipe (410) comprising at least the secondary radiator (40), an element (41) for circulating the heat-transfer fluid in the second circuit and the second heat exchanger (22), the second heat-transfer fluid circuit (4) comprising at least a second pipe (420) branching off from the first pipe (410), the second pipe (420) comprising a heat exchanger (43) thermally coupled to at least one element of the electric powertrain of the vehicle.

5. Temperature management system (1) according to any one of the preceding claims, wherein the first heat-transfer fluid circuit (3) comprises at least a first line (310) on which are arranged at least the primary radiator (30), the first heat exchanger (21) and a member (31) for circulating the heat-transfer fluid in the first heat-transfer fluid circuit (3).

6. Temperature management system (1) according to Claim 5, wherein the first heat-transfer fluid circuit (3) and the second heat-transfer fluid circuit (4) are distinct circuits.

7. Temperature management system (1) according to Claim 6, wherein the first heat-transfer fluid circuit (3) comprises at least one bypass line (320) which comprises a unit heater (32) configured to perform an exchange of heat between the heat-transfer fluid and the flow (FA2) of interior air sent into the interior of the vehicle, the bypass line (320) extending between a separation point (321) and a joining point (322), the separation point (321) being downstream of the first heat exchanger (21) in the direction (S2) of circulation of the heat-transfer fluid in the first heat-transfer fluid circuit (3), and the separation point (321) being positioned between the first heat exchanger (21) and the primary radiator (30), the joining point (322) being upstream of the first heat exchanger (21) in the direction (S2) of circulation of the heat-transfer fluid in the first heat-transfer fluid circuit (3), and the joining point (322) being positioned between the primary radiator (30) and the first heat exchanger (21).

8. Temperature management system (1) according to Claim 5, wherein the first heat-transfer fluid circuit (3) and the second heat-transfer fluid circuit (4) are interconnected.

9. Temperature management system (1) according to the preceding claim, wherein the first heat-transfer fluid circuit (3) comprises at least one bypass line (320) comprising a unit heater (32) configured to perform an exchange of heat between the heat-transfer fluid and the flow (FA2) of interior air sent into the interior of the vehicle, the bypass line (320) extending between a separation point (321) and a joining point (322), the separation point (321) being downstream of the first heat exchanger (21) in the direction (S2) of circulation of the heat-transfer fluid in the first heat-transfer fluid circuit (3), and the separation point (321) being positioned between the first heat exchanger (21) and the primary radiator (30), the joining point (322) being positioned on the second heat-transfer fluid circuit (4) upstream of the second heat exchanger (22) in the direction (S3) of circulation of the heat-transfer fluid in the second heat-transfer fluid circuit (4), the joining point (322) being positioned between the secondary radiator (40) and the second heat exchanger (22).

10. Temperature management system (1) according to Claim 8 or 9, wherein the second heat-transfer fluid circuit (4) extends between a fork point (411) and a connecting point (412), the connecting point (412) being positioned on the first heat-transfer fluid circuit (3) upstream of the first heat exchanger (21) in the direction (S2) of circulation of the heat-transfer fluid in the first heat-transfer fluid circuit (3), the connecting point (412) being positioned between the primary radiator (30) and the first heat exchanger (21), and the fork point (411) being positioned on the first heat-transfer fluid circuit (3) either upstream of the primary radiator (30) in the direction (S2) of circulation of the heat-transfer fluid in the first heat-transfer fluid circuit (3), the fork point (411) being positioned between the first heat exchanger (21) and the primary radiator (30), or downstream of the primary radiator (30) in the direction (S2) of circulation of the heat-transfer fluid in the first heat-transfer fluid circuit (3), the fork point (411) being positioned between the primary radiator (30) and the first heat exchanger (21).
